# EUROPEAN PATENT SPECIFICATION

(11) **EP 3 926 473 B1**
(45) Date of publication and mention of the grant of the patent: **01.05.2024**
(21) Application number: 21178260.2
(22) Date of filing: 08.06.2021
(51) Int. Cl.: G06F 9/50, G06F 9/455

(54) **SYSTEMS AND METHODS OF PROVIDING AN ABSTRACTION LAYER BETWEEN AN APPLICATION LAYER AND HARDWARE COMPONENTS OF A COMPUTING DEVICE**
SYSTEME UND VERFAHREN ZUR BEREITSTELLUNG EINER ABSTRAKTIONSSCHICHT ZWISCHEN EINER ANWENDUNGSSCHICHT UND HARDWARE-KOMPONENTEN EINER RECHENVORRICHTUNG
SYSTÈMES ET PROCÉDÉS DE FOURNITURE D'UNE COUCHE D'ABSTRACTION ENTRE UNE COUCHE D'APPLICATION ET DES COMPOSANTS MATÉRIELS D'UN DISPOSITIF INFORMATIQUE

(30) Priority: 18.06.2020 US 202016904940
(43) Date of publication of application: 22.12.2021
(73) Proprietor: General Electric Company, Schenectady, NY 12345 (US)
(72) Inventor: SCHMITZ, Andrea Marie, Schenectady, 12345 (US); BERNER, Andrew William, Schenectady, 12345 (US); WARD, James, Schenectady, 12345 (US)
(74) Representative: Openshaw & Co.

(56) References cited:
- US-A1- 2005 216 920
- US-A1- 2016 335 059
- US-A1- 2018 246 749
- US-B1- 6 366 656

## Description

### BACKGROUND

### Field

The present disclosure generally relates to providing an abstraction layer and, more particularly, to systems and methods for providing an abstraction layer that maintains usability of application code on systems that receive hardware revisions.

### Technical Background

Embedded real time operating systems (RTOS) used in various modern devices use a Board Support Package (BSP) or equivalent to adapt an operating system kernel to target hardware and provide system services. In addition, embedded real time operating systems provide additional features such as timers and events to support real time operation. However, application software installed on a device utilizing a real time operating system typically require significant programming changes to the application software if the hardware of the device is altered (e.g., upgraded, swapped out, or the like). For example, if the device is modified with new hardware components having different timing (e.g., a newer processor that runs faster relative to an older processor) and/or to replace obsolete hardware, the device will complete various processing activities at a quicker rate. However, such an increase in rate of processing can be detrimental to the application layer because the applications used by the device may be designed, certified, or the like to operate with a particular timing and/or particular components.

US 2005/216920 A1 discloses a device virtual machine that is configured to emulate a hardware device. The device VM includes device emulation code used to emulate the hardware device. US 2018/246749 A1 discloses systems and methods for embedding emulation support for a hardware feature into a virtual machine to enhance the security of the hypervisor and host system. US 2016/335059 A1 discloses a method for reusing certified capabilities for the implementation of a function on board an aircraft is disclosed. The certified capability can include a historical hardware platform associated with a historical software application. US 6 366 656 B1 discloses a PC-based PBX incorporating preexisting call control software designed to operate in a computing environment which is not PC-based.

### SUMMARY

The invention is defined by the appended claims. Claim 1 defines a method of providing an abstraction layer between an application layer and one or more existing hardware components of a computing device. In the following, apparatus and/or methods referred to as embodiments that nevertheless do not fall within the scope of the claims should be understood as examples useful for understanding the invention.

The embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, wherein like structure is indicated with like reference numerals and in which:
FIG. 1 schematically depicts illustrative hardware components of a device that provides an abstraction layer according to one or more embodiments shown and described herein;
FIG. 2A depicts a plurality of illustrative logic modules contained within a memory component of a device that provides an abstraction layer according to one or more embodiments shown and described herein;
FIG. 2B depicts a plurality of illustrative bases within a data storage component of a device that provides an abstraction layer according to one or more embodiments shown and described herein;
FIG. 3 depicts a flow diagram of an illustrative a method of providing an abstraction layer between an application layer and one or more hardware components of a computing device according to one or more embodiments shown and described herein;
FIG. 4 depicts a flow diagram of an illustrative method of receiving a generated schedule according to one or more embodiments shown and described herein;
FIG. 5 schematically depicts an arrangement of a plurality of illustrative software layers contained within the memory component of FIG. 1 according to one or more embodiments shown and described herein;
FIG. 6 schematically depicts an arrangement of a plurality of illustrative software layers contained within the memory component of FIG. 1 according to one or more embodiments shown and described herein;
FIG. 7 schematically depicts a flow diagram of an illustrative example of operation of two types of abstraction layers to manage data traffic via Ethernet according to one or more embodiments shown and described herein;
FIG. 8 depicts a flow diagram of an illustrative method of providing an abstraction layer that manages data flow based on context for Ethernet hardware according to one or more embodiments shown and described herein;
FIG. 9 depicts a flow diagram of an illustrative method of utilizing an abstraction layer for managing data flow via Ethernet hardware according to one or more embodiments shown and described herein;
FIG. 10 depicts a flow diagram of an illustrative method of utilizing an abstraction layer for the purposes of polling via Ethernet hardware according to one or more embodiments shown and described herein;
FIG. 11 depicts a flow diagram of an illustrative method of providing an abstraction layer that manages data based on context for a Universal Asynchronous Receiver/Transmitter (UART) according to one or more embodiments shown and described herein;
FIG. 12 depicts a flow diagram of an illustrative method of utilizing an abstraction layer for the purposes of managing data flow via UART according to one or more embodiments shown and described herein;
FIG. 13 depicts a flow diagram of an illustrative method of utilizing an abstraction layer for the purposes of polling via UART according to one or more embodiments shown and described herein;
FIG. 14 depicts a flow diagram of an illustrative method of providing an abstraction layer that manages data based on context for Controller Area Network (CAN) hardware according to one or more embodiments shown and described herein;
FIG. 15 depicts a flow diagram of an illustrative method of utilizing an abstraction layer for the purposes of managing data flow via CAN hardware according to one or more embodiments shown and described herein;
FIG. 16 depicts a flow diagram of an illustrative method of utilizing an abstraction layer for the purposes of polling via CAN hardware according to one or more embodiments shown and described herein;
FIG. 17 depicts a flow diagram of an illustrative method of providing an abstraction layer that manages data based on context for Serial Peripheral Interface (SPI) hardware according to one or more embodiments shown and described herein;
FIG. 18 depicts a flow diagram of an illustrative method of utilizing an abstraction layer for the purposes of managing data flow via SPI hardware according to one or more embodiments shown and described herein;
FIG. 19 depicts a flow diagram of an illustrative method of providing an abstraction layer that manages data based on context for inter-integrated circuit (I2C) hardware according to one or more embodiments shown and described herein;
FIG. 20 depicts a flow diagram of an illustrative method of utilizing an abstraction layer for the purposes of managing data flow via I2C hardware according to one or more embodiments shown and described herein;
FIG. 21 depicts a flow diagram of an illustrative method of providing an abstraction layer that manages data flow based on context and timing for Ethernet hardware according to one or more embodiments shown and described herein;
FIG. 22 depicts a flow diagram of an illustrative method of utilizing an abstraction layer for initializing data flow via Ethernet hardware based on context and timing according to one or more embodiments shown and described herein;
FIG. 23 depicts a flow diagram of an illustrative method of utilizing an abstraction layer for transmitting data via Ethernet hardware based on context and timing according to one or more embodiments shown and described herein;
FIG. 24 depicts a flow diagram of an illustrative method of utilizing an abstraction layer for reading data via Ethernet hardware based on context and timing according to one or more embodiments shown and described herein;
FIG. 25 depicts a flow diagram of an illustrative method of providing an abstraction layer that manages data flow based on context and timing for UART hardware according to one or more embodiments shown and described herein;
FIG. 26 depicts a flow diagram of an illustrative method of utilizing an abstraction layer for initializing data flow via UART hardware based on context and timing according to one or more embodiments shown and described herein;
FIG. 27 depicts a flow diagram of an illustrative method of utilizing an abstraction layer for transmitting data via UART hardware based on context and timing according to one or more embodiments shown and described herein; and
FIG. 28 depicts a flow diagram of an illustrative method of utilizing an abstraction layer for reading data via UART hardware based on context and timing according to one or more embodiments shown and described herein.

### DETAILED DESCRIPTION

Referring generally to the figures, embodiments described herein are directed to systems and methods for providing an abstraction layer between an application layer and one or more hardware components of an electronic device, particularly electronic devices that incorporate a real time operating system (RTOS). The abstraction layer allows for modification of hardware components in the electronic device without revisions to software located within the application layer of the device. In one or more embodiments, the systems and methods described herein determine a component type and a timing for performing a task according to a request from the application for a resource, determine whether the existing hardware components correspond to the component type for performing the task, obtain, based on the timing, a timing schedule for providing a response to the request at the timing. If the existing hardware components do not correspond to the component type for performing the task and/or do not correspond to the timing schedule (e.g., due to a modification of hardware components within the device), the systems and methods of some embodiments described herein provide to the application layer an emulated output that mimics an expected output of the component type with the timing. In one or more embodiments, the timing schedule maps the timing to an available system I/O resource and/or to external and internal system timing requirements.

The systems and methods described herein may find particular applicability in RTOS systems and devices where a predetermined timing is necessary for continued, correct, and/or optimal operation. For example, the systems and methods described herein may be implemented in a real-time control system such as, for example, a full authority digital engine control (FADEC) that digitally manages all aspects of an aircraft engine. As can be appreciated, the timing of operation of various aspects of an aircraft engine may be tightly maintained to ensure appropriate operation thereof. Thus, implementing an abstraction layer, as described herein, may allow for upgrades, replacement, and/or the like of various hardware components of the FADEC system and/or the aircraft engine without affecting the timing of various software programs executed by the FADEC system, thereby allowing the FADEC system to operate as originally programmed, certified, and/or as expected after such an upgrade, replacement, and/or the like. In another example, the systems and methods described herein may be implemented in various medical equipment, such as pacemakers, ventilators, and/or the like that operate according to a particular timing. As can be appreciated, the timing of operation of certain medical equipment may be tightly maintained to ensure proper operation (e.g., a pacemaker provides an electric current at particular intervals to ensure appropriate operation thereof). Thus, by implementing an abstraction layer as described herein, certain changes to hardware components of the medical equipment that would otherwise affect timing (e.g., delivery of the electric current) are controlled by the abstraction layer such that timing remains the same with the new hardware components. In another example, the systems and methods described herein may be implemented in various factory process control devices such as control devices for conveyor belts, assembly line operations, machines and/or the like that operate according to a particular timing. As can be appreciated, the timing of certain operations may be tightly maintained to ensure proper operation (e.g., an automated assembly line must perform certain actions at certain times to keep the assembly line moving). Thus, by implementing an abstraction layer as described herein, certain changes to hardware components of the factory control devices that would otherwise affect timing (e.g., time at which certain components perform certain actions) are controlled by the abstraction layer such that timing remains the same with the new hardware components. The systems and methods described herein may also generally have applicability to other industries in the industrial and/or embedded space that utilize a RTOS, as these industries are normally considered to be long-life industries (e.g., 20-30+ years), while processors may tend to last a much shorter period of time (e.g., 10-15 years).

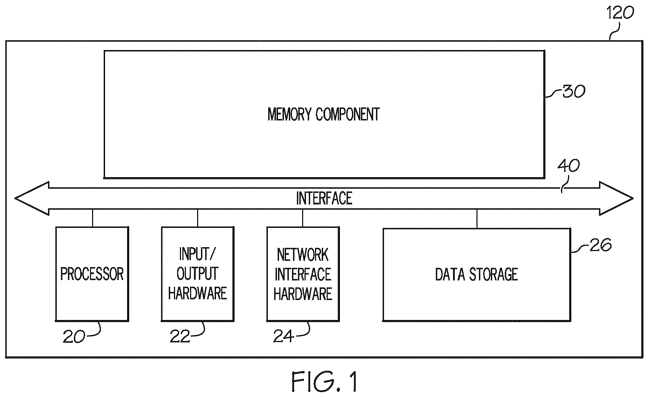

FIG. 1 depicts an illustrative computing device 120 that provides an abstraction layer according to the various embodiments described herein. The computing device 120 described herein may be a computing system, a specialized device or system (e.g., a real-time control system such as a FADEC system, medical equipment, or the like) in various embodiments. Accordingly, while in some embodiments the computing device 120 may be configured as a general purpose computer with the requisite hardware, software, and/or firmware, in some embodiments, the computing device 120 may be configured as a special purpose device or system designed specifically for performing particular tasks that require particular timing, as well as the functionality described herein.

As also illustrated in FIG. 1, the computing device 120 includes a processor 20, input/output hardware 22, network interface hardware 24, a data storage component 26, and a non-transitory memory component 30. A local interface 40 is also included in FIG. 1 and may be implemented as a bus or other interface to facilitate communication among the components of the computing device 120.

The processor 20, such as a computer processing unit (CPU), may be the central processing unit of the computing device 120, performing calculations and logic operations to execute a program. The processor 20, alone or in conjunction with the other components, is an illustrative processing device, computing device, processor, or combinations thereof, including, for example, a multi-core processor, a microcontroller, a field-programmable gate array (FPGA), or an application-specific integrated circuit (ASIC). The processor 20 may include any processing component configured to receive and execute instructions (such as from the data storage component 26 and/or the memory component 30). In some embodiments, the processor 20 may be a plurality of processing devices.

The input/output hardware 22 may include a monitor, a keyboard, a mouse, a printer, a camera, a microphone, a speaker, a touch-screen, a motor controller, a solenoid and valve driver, an analog or a digital sensor (e.g., temperature, pressure, positional, etc.) and/or other device for receiving, sending, and/or presenting data, reading sensors or controlling motors, valves, solenoids and the like, particularly those used in aviation systems, transportation systems, process control systems, power generation and distribution systems, healthcare systems, and/or the like. For example, the input/output hardware 22 may include a CAN bus, a serial bus, and/or another industry standard bus. In a particular embodiment, the input/output hardware 22 may be hardware that is certified as compliant with applicable industry standards, such as ARINC characteristics or specifications (formerly promulgated by Aeronautical Radio, Inc, presently by the SAE Industry Technologies Consortia). The network interface hardware 24 may include any wired or wireless networking hardware, such as a modem, LAN port, wireless fidelity (Wi-Fi) card, WiMax card, mobile communications hardware, and/or other hardware for communicating with other networks and/or devices. For example, the network interface hardware 24 may be used to facilitate communication between external storage devices, user computing devices, server computing devices, external control devices, and/or the like via a network, such as, for example, a local network, the Internet, and/or the like.

The memory component 30 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 30 may be configured to include various logic modules (each of which may be embodied as a computer program, firmware, or hardware, as an example).

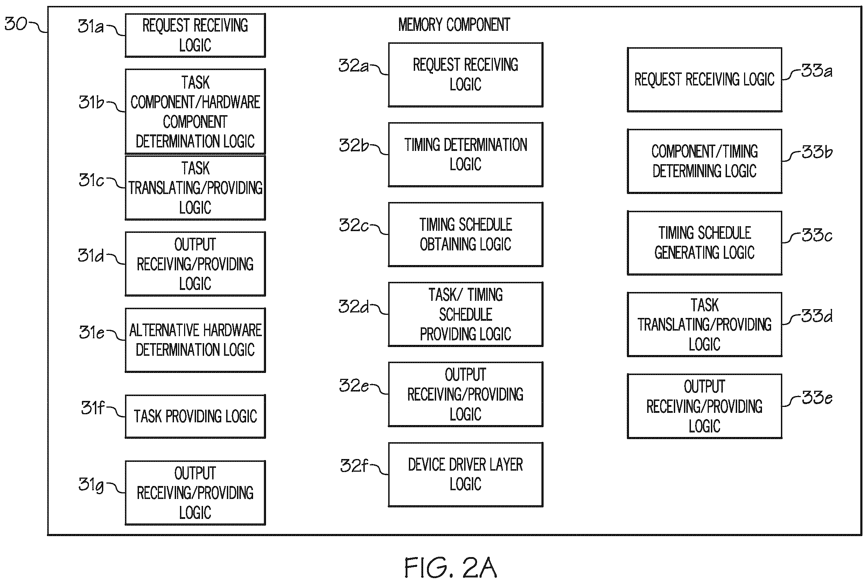

FIG. 2A depicts illustrative examples of various logic modules contained within the memory component 30 depicted in FIG. 1. For example, included in the memory component 30 is request receiving logic 31a, task component/hardware component determination logic 31b, task translating/providing logic 31c, output receiving/providing logic 31d, alternative hardware determination/providing logic 31e, output receiving/providing logic 31f, request receiving logic 32a, timing determination logic 32b, timing schedule obtaining logic 32c, task/timing schedule providing logic 32d, output receiving/providing logic 32e, device driver layer logic 32f, request receiving logic 33a, component/timing determination logic 33b, timing schedule generating logic 33c, task translating/providing logic 33d, and output receiving/providing logic 33e.

The request receiving logic 31a may contain one or more programming instructions for receiving a request for one or more resources from an application layer stored in a non-transitory medium of the computing device 120 (FIG. 1). The request may be formatted without information related to an interface and/or hardware of the computing device 120. For example, the request may be formatted such that the one or more resources are requested independently of any interfaces and/or hardware.

The task component/hardware component determination logic 31b may contain one or more programming instructions for determining a component type for performing a task according to the request for the resource and/or determining whether the one or more existing hardware components of the computing device correspond to the component type for performing the task based on a predetermined function of the one or more existing hardware components. In one or more embodiments, determining whether the existing hardware components correspond to the component type for performing the task may include transmitting a driver information request to a hardware device driver layer, the driver information request corresponding to the one or more existing hardware components, receiving driver information from the hardware device driver layer, the driver information corresponding to a set of functions of the one or more existing hardware components, and/or determining one or more functions of the set of functions that corresponds to the component. In one or more embodiments, determining whether the existing hardware components correspond to the component type for performing the task may include determining whether one or more components of a real-time control system (e.g., a full authority digital engine control (FADEC) system) correspond to the component type for performing the task. In one or more embodiments, determining whether the existing hardware components correspond to the component type for performing the task may include determining whether one or more components of a medical device control system correspond to the component type for performing the task. In one or more embodiments, determining whether the existing hardware components correspond to the component type for performing the task may include determining whether one or more components of a power turbine control system correspond to the component type for performing the task. In one or more embodiments, determining whether the existing hardware components correspond to the component type for performing the task may include determining whether one or more components of a factory control system correspond to the component type for performing the task.

The task translating/providing logic 31c may contain one or more programming instructions for converting the task into a translated task readable by the one or more existing hardware components and/or providing the translated task to the one or more existing hardware components The task translating/providing logic 31c can convert the task into a task which is readable by the existing hardware and/or provide the translated task to the to the existing hardware components even when the existing hardware components do not correspond to the component type for performing the task.

The output receiving/providing logic 31d may contain one or more programming instructions for receiving an output from the one or more existing hardware components as a result of providing the translated task, and/or providing the output to the application layer as an emulated output that mimics an expected output of the component type. Thus, for example, the application layer can receive the output from the existing hardware components even when the existing hardware components do not correspond to the component type for performing the task.

The alternative hardware determination/providing logic 31e may contain one or more programming instructions for determining that a second hardware component of the one or more existing hardware components is capable of performing the task as an alternative to the first hardware component, and/or providing the task to the second hardware component. Thus, when a first hardware component of the existing hardware components does not correspond to the component type, an alternative hardware component capable of performing the task can be determined, and the task can be translated to the alternative hardware component.

The output receiving/providing logic 31f may contain one or more programming instructions for receiving an output from the second hardware component as a result of providing the task, and/or providing the output to the application layer. Thus, the application layer may receive the one or more requested resources even when a first hardware component of the existing hardware components does not correspond to the component type.

The request receiving logic 32a may contain one or more programming instructions for receiving a request for one or more resources from an application layer stored in a non-transitory medium of the computing device 120 (FIG. 1). The request may be formatted without information related to an interface and/or hardware of the computing device 120 (FIG. 1). For example, the request may be formatted such that the one or more resources are requested independently of any interfaces and/or hardware.

Still referring to FIG. 2A, the timing determination logic 32b may contain one or more programming instructions for determining a timing for performing a task according to the request for the resource. Thus, for example, it can be determined at what time (e.g., frequency) the application layer needs the task to be performed.

The timing schedule obtaining logic 32c may contain one or more programming instructions for obtaining, based on the timing, a timing schedule for providing a response to the request according to the timing. The actual generation of the timing schedule is determined and maintained by a separate layer or component, such as an input/output (I/O) scheduler layer (e.g., provided by the timing schedule generating logic 33c). Thus, for example, when the application layer needs to receive a resource at a certain frequency, the timing schedule can contain information related to when the resource is needed. In one or more embodiments, the timing schedule maps the timing to an available system I/O resource and/or to external and internal system timing requirements.

The task/timing schedule providing logic 32d may contain one or more programming instructions for providing the task and the timing schedule to an input/output (I/O) scheduler. The I/O scheduler can be used to control the timing. In one or more embodiments, the timing schedule may be provided to the I/O scheduler at application compile time. In one or more embodiments, the timing schedule may be provided to the I/O scheduler during application runtime. In one or more embodiments, the task and timing schedule may be provided to an I/O scheduler having an independent clock having a clock rate that is decoupled from the clock rate of the one or more existing hardware components. In one or more embodiments, the task and timing schedule may be provided to a software based I/O scheduler. In one or more embodiments, the task and timing schedule may be provided to a hardware based I/O scheduler. Examples of such hardware in one or more embodiments include, but are not limited to a multi-core processor, a microcontroller, a field-programmable gate array (FPGA), or an application-specific integrated circuit (ASIC). In one or more embodiments, additional implementations of the I/O scheduler may include, for example, any construct that can isolate an application layer from a system's I/O.

The output receiving/providing logic 32e may contain one or more programming instructions for receiving an input or output from the I/O scheduler as a result of providing the translated task, and/or providing the input or output to the application layer as an emulated input or output that mimics the timing. This may allow, for example, the application layer to receive the requested resource according to the timing independently of any processor timing. This may also, for example, maintain an application programming interface (API) to the data (e.g., input or output) of a particular application without sending the data in a format that the device could return (e.g., device returns 12 bits, but the application only expects 8 bits). In one or more embodiments, providing the input or output to the application layer as the emulated input or output may include delaying transmission of one or more portions of the input or output in accordance with timing. In one or more embodiments, the timing may be a specified timing.

The device driver layer logic 32f may contain one or more programming instructions for transmitting a driver information request to a hardware device driver layer, the driver information request corresponding to the one or more existing hardware components, and/or receiving driver information from the hardware device driver layer, the driver information corresponding to a hardware timing of the one or more existing hardware components. In one or more embodiments, the device driver layer logic 32f may determine whether the one or more existing hardware components of the computing device have a hardware timing that does not correspond to the timing schedule.

The request receiving logic 33a may contain one or more programming instructions for receiving a request for one or more resources from an application layer stored in a non-transitory medium of the computing device 120 (FIG. 1). The request may be formatted without information related to an interface and/or hardware of the computing device 120 (FIG. 1). For example, the request may be formatted such that the one or more resources are requested independently of any interfaces and/or hardware.

Still referring to FIG. 2A, the component/timing determination logic 33b may contain one or more programming instructions for determining a component type and a timing for performing a task according to the request for the resource and/or determining whether the one or more existing hardware components of the computing device correspond to the component type for performing the task. In one or more embodiments, determining the component type for performing the task may include determining a context of the request. In one or more embodiments, determining the context of the request may include accessing a context base containing one or more stored contexts cross-referenced with requests. In one or more embodiments, the stored contexts may be part of a library of contexts either created initially or created over time based on the content of the one or more resources. As the library functionality is expanded, application code may become more and more re-usable.

The timing schedule generating logic 33c may contain one or more programming instructions for generating, based on the expected application timing, a timing schedule for providing a response to the request according to the timing. Thus, for example, when the application layer needs to receive a resource at a certain frequency (e.g., data is needed every 10 milliseconds (ms)), the timing schedule can contain information related to the frequency at which the resource is needed. In one or more embodiments, the timing schedule maps the timing to an available system I/O resource and/or to external and internal system timing requirements. In some embodiments, the timing schedule generating logic 33c may maintain a timing schedule.

The task translating/providing logic 33d may contain one or more programming instructions for converting the task into a translated task readable by the one or more existing hardware components, and/or providing the translated task and the timing schedule to an input/output (I/O) scheduler, the I/O scheduler interfacing with one or more existing hardware components to generate an input or output. In one or more embodiments, the I/O scheduler may interface with the one or more existing hardware components to generate an input or output depending on an interface type. In one or more embodiments, providing the task and the timing schedule to the I/O scheduler may include providing the task and timing schedule to a hardware based I/O scheduler and/or a software based I/O scheduler. Examples of such hardware of the I/O scheduler in one or more embodiments include, but are not limited to, a multi-core processor, a microcontroller, a field-programmable gate array (FPGA), or an application-specific integrated circuit (ASIC).

The output receiving/providing logic 33e may contain one or more programming instructions for receiving the input or output from the I/O scheduler, and/or providing the input output to the application layer as an emulated input or output that mimics an expected input or output of the component type with the timing. In one or more embodiments, providing the input or output to the application layer as the emulated input or output may include delaying transmission of one or more portions of the input or output in accordance with the timing.

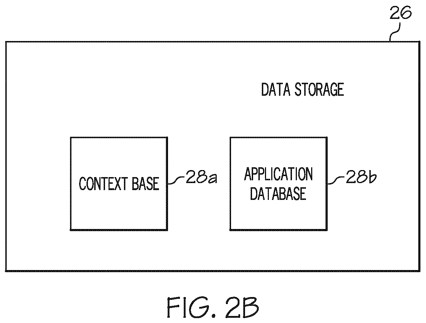

Referring again to FIG. 1, the data storage component 26 is generally a storage medium, may contain one or more data repositories for storing data that is received and/or generated. The data storage component 26 may be any physical storage medium, including, but not limited to, a hard disk drive (HDD), memory (e.g., read-only memory (ROM), programmable read-only memory (PROM), random access memory (RAM), double data rate (DDR) RAM, flash memory, and/or the like), removable storage, a configuration file (e.g., text) and/or the like. While the data storage component 26 is depicted as a local device, it should be understood that the data storage component 26 may be a remote storage device, such as, for example, a server computing device, cloud-based storage device, or the like. FIG. 2B depicts illustrative examples of various databases contained within the data storage component 26 depicted in FIG. 1. As illustrated in FIG. 2B, the data storage component 26 may store a context base 28a, which in at least one embodiment contains one or more stored contexts cross-referenced with requests. The one or more stored contexts may include various information related to the type of interface of the computing device 120 (e.g., CAN, Ethernet, UART and the like). Such information may be programmed into the context base and cross-referenced with the type of resource(s) requested from the application layer. In one or more embodiments, the context base 28a may include one or more libraries. In one or more embodiments, the one or more stored contexts may include a library that connects a generic application data model to a specific I/O device's operational requirements to take application layer data and perform one or more system tasks using the I/O device. The one or more libraries may include one or more commands, calls, functions, implementations, protocols, instructions or the like. The data storage component 26 may store an application database 28b, which in at least one embodiment includes one or more libraries. The application layer may access a library, for example, in order to call a certain function. The one or more libraries may include one or more commands, calls, functions, implementations, protocols, instructions or the like. The databases 28a and/or 28b may be stored in one or more data storage devices. Other data may be stored in the data storage component 26 to provide support for functionalities described herein.

Referring again to FIG. 2B, in one or more embodiments, one or more components of the databases 28a and/or 28b may be dynamically loaded. In one or more embodiments, one or more components of the databases 28a and/or 28b may be statically compiled. In one or more embodiments, one or more components of the databases 28a and/or 28b may be hybrid components whereby certain components are dynamically loaded and other components are statically compiled. That is, in come embodiments, some components may be built at compile time and other components may be loaded dynamically.

It should be understood that the components illustrated in FIGS. 1, 2A and 2B are merely illustrative and are not intended to limit the scope of this disclosure. More specifically, while the components in FIGS. 1, 2A and 2B are illustrated as residing within the computing device 120, this is a nonlimiting example. In some embodiments, one or more of the components may reside external to the computing device 120. Similarly, while FIG. 1 is directed to the computing device 120, other components may include similar hardware, software, and/or firmware.

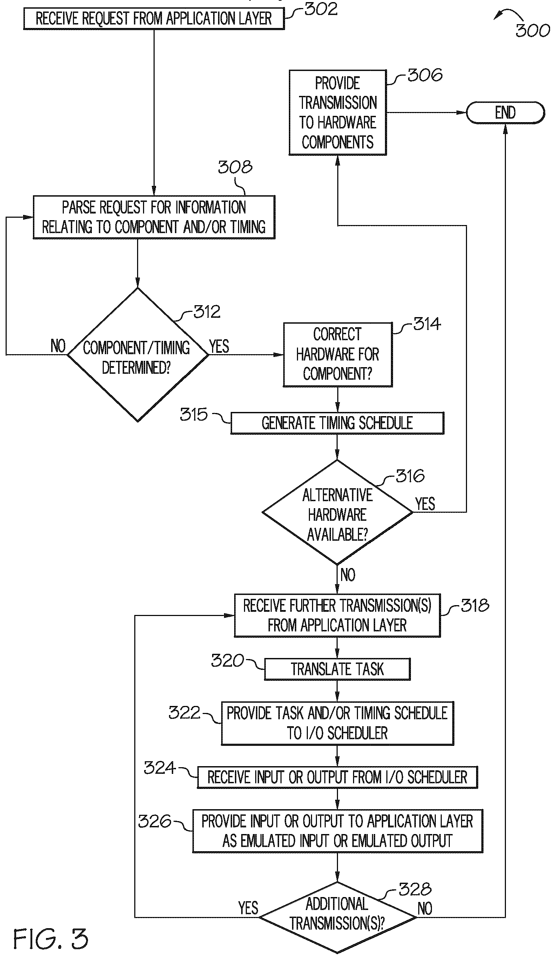

Referring now to FIG. 3, a flow diagram that graphically illustrates a method 300 of providing an abstraction layer between an application layer and one or more existing hardware components of a computing device. Although the steps associated with the blocks of FIG. 3 will be described as being separate tasks, in other embodiments, the blocks may be combined or omitted. Further, while the steps associated with the blocks of FIG. 3 will be described as being performed in a particular order, in other embodiments, the steps may be performed in a different order.

Still referring to FIG. 3, at block 302, a request for one or more resources is received from an application layer stored in a non-transitory medium of the computing device. That is, the application layer, when executing an application, may transmit one or more requests for various hardware resources that are needed in order to execute the application.

At block 308, the request is parsed for information related to context and/or timing. In one or more embodiments the request from the application layer is made according to a generic data interface model (e.g., the application layer does not provide timing information). In one or more embodiments, the parsing of the request is performed by a context layer which parses the request into a specific data format and one or more operation tasks to utilize the application layer data (e.g., from the request) and perform an I/O operation in a format needed by the specific interface of the device. In one or more embodiments, the request is parsed for timing by an I/O scheduler layer, where the I/O scheduler layer determines when the one or more operation tasks are performed. In one or more embodiments, if there is no context layer present, the request from the application layer should conform to the format needed by a particular interface of the device. However, if the request does conform to the needed format, the I/O scheduler layer would determine when the one or more operation tasks are performed. Then, at block 312, it is ascertained whether a component type and a timing for performing a task according to the request for the resource has been determined. If the component type and/or timing has not been determined (block 312: NO), the method returns to block 308. If the component type and/or timing has been determined (block 312: YES), the method continues to block 314.

At block 314, it is determined whether the whether the one or more existing hardware components of the computing device correspond to the component type for performing the task.

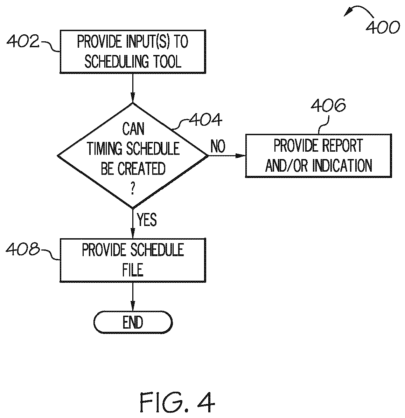

At block 315, a timing schedule is obtained, based on the timing for providing a response to the request according to the timing. In one or more embodiments, the timing schedule maps the timing to an available system I/O resource and/or to external and internal system timing requirements. Such a mapping may be completed, for example, by the I/O scheduler layer and provided to the abstraction layer in some embodiments. In one or more embodiments, the timing schedule may be generated at runtime. In one or more embodiments, the timing schedule may be created as a non-resident task (e.g., not in the system itself). In one or more embodiments, the timing schedule may be created using a scheduling tool, as described herein with respect to FIG. 4. In one or more embodiments, the output of the scheduling tool may be a schedule file used by the I/O scheduler layer.

Still referring to FIG. 3, at block 316, a determination is made as to whether alternative hardware is available that corresponds to the component type for performing the task and corresponds to the timing schedule. For example, if multiple hardware components are available, and one of those hardware components corresponds to the component type for performing the task and corresponds to the timing schedule, then that hardware component could be utilized and the method could continue on to block 306, where a transmission is provided to the one or more existing hardware components. If alternative hardware is not available (block 316: NO), the method continues to block 318.

At block 318, further transmission(s) can be received from the application layer. That is, in the course of running an application, the application layer may generally transmit a plurality of requests (e.g., dozens, hundreds, or even thousands of requests, depending on the type of system). For example, such requests may include, but are not limited to, a request for a reading from one or more sensors (e.g., a pressure sensor, a temperature sensor, or the like), a request for a particular component (e.g., a stepper motor or the like) to move to a certain position, a request for a particular component to open or close (e.g., a valve, a solenoid, or the like).

At block 320, the task is converted (e.g., translated) into a translated task readable by the one or more existing hardware components. This allows the existing hardware components to understand the task, even if the request from the application layer was hardware-agnostic.

At block 322, the translated task and/or the timing schedule are provided to an input/output (I/O) scheduler, the I/O scheduler interfacing with one or more existing hardware components to generate an input or output. In one or more embodiments, the I/O scheduler may interface with the one or more existing hardware components to generate an input or an output depending on an interface type. The I/O scheduler may be implemented via software and/or hardware. For example, some functions of the I/O scheduler may be completed by hardware components, whereas other functions may be completed via one or more software processes. That is, the timing schedule itself is unified (e.g., one time base, with tasks split between different implementations), but can be handled by a plurality of different elements.

At block 324, an input or an output is received from the I/O scheduler. At block 326, the input or output is provided to the application layer as an emulated input or an emulated output that mimics an expected input or an expected output of the component type with the timing. The emulated input or the emulated output may allow the application layer to receive the requested resource even if the hardware component(s) do not correspond to the component type for performing the task and/or do not correspond to the timing schedule.

At block 328, it is determined if there are any additional transmissions. If there are no additional transmissions (block 328: NO), the method ends. If there are additional transmissions (block 328: YES), the method returns to block 318 to receive the further transmissions from the application layer.

FIG. 4 depicts a flow diagram of an illustrative method of receiving a generated schedule according to one or more embodiments. Referring now to FIG. 4, a flow diagram that graphically illustrates a method 400 of receiving a generated schedule. Although the steps associated with the blocks of FIG. 4 will be described as being separate tasks, in other embodiments, the blocks may be combined or omitted. Further, while the steps associated with the blocks of FIG. 4 will be described as being performed in a particular order, in other embodiments, the steps may be performed in a different order.

At block 402, inputs are provided to a scheduling tool (e.g., scheduling solver). The inputs include, for example, information pertaining to when an application would like an I/O task to happen from one or more requesting sources (e.g., multicore processors may have many concurrent attempted requests for I/O), and the capabilities of the I/O devices (e.g., bandwidth of the I/O devices, whether the I/O devices can perform their function concurrently with other I/O devices, etc.). In one or more embodiments, the scheduling tool may be, e.g., a network scheduling solver similar to the type of network schedule solver used on aircraft Avionics Full-Duplex Switched Ethernet (AFDX) networks.

At block 404, the scheduling tool then analyzes the requests and their desired timing against the capability of the system to determine if a schedule can be created that meets every constraint. If a schedule can be created (block 404: YES), the method proceeds to block 406 and the scheduling tool produces an output file that creates that schedule for the I/O scheduler.

If the scheduling tool determines that a schedule cannot be created (block 404: NO) the method continues to block 308 and reports that a schedule cannot be created and/or provides an indication (e.g., an error message or the like) that intervention is needed (e.g., an instruction to system designers need to change their inputs to allow a schedule to be created). For example, changing inputs may include, but is not limited to, changing the desired timing of events, changing the capability of I/O devices and/or a combination of both.

In one or more embodiments, the timing schedule may be created based on predetermined timing requirements and/or based on prior calculations of processor timing and device performance.

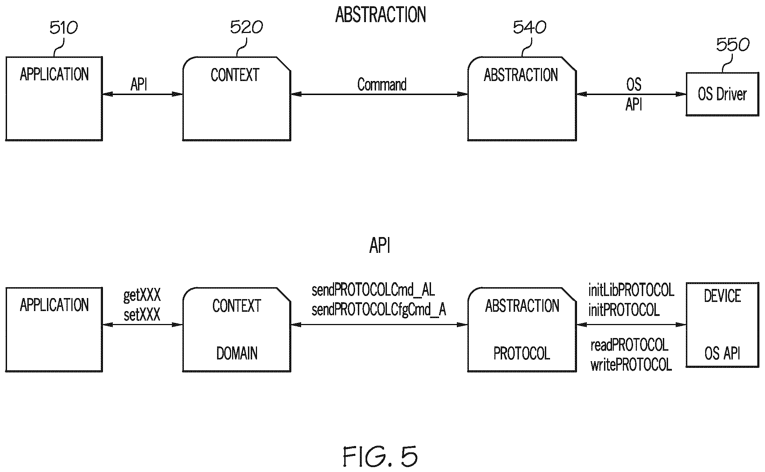

FIG. 5 depicts exemplary software layers of the computing device 120 (FIG. 1) in one or more embodiments, including an application layer 510, a context layer 520, an abstraction layer 540 and an OS driver layer 550. The application layer 510 may be connected to the context layer 520 via an Application Programming Interface (API). When the application layer 510 communicates with the context layer 520, the application layer 510 may not know what type of interface it is communicating with. The application layer 510 may be requesting data of a certain type and may request the data from a certain perspective (e.g., provide airspeed in m/s). The context layer 520 may then send a command to the abstraction layer 540 based on the data requested by the application layer 510. The context layer 520 may communicate with the abstraction layer 540, via a universal driver. The universal driver may include certain common elements, including, but not limited to, receipt package, transfer package or IP address, but may also exclude other more specific elements such as, e.g., where a specific register is located in a part, is there a serial bus or parallel bus or PCI express, etc. The abstraction layer 540 may communicate with the OS driver layer 550 via an OS API. The communication between the abstraction layer 540 and the OS driver layer 550 may involve, e.g., the more specific elements listed above. The requested data may then move from the abstraction layer 540 to the context layer 520 to the application layer 510.

Further, in one or more embodiments, the application layer defines the incoming data format and/or the outgoing data format. The context layer can provides a transition from a generic (e.g., hardware agnostic) format of application data that is being moved through the system I/O to/from any type of data format (e.g., single byte serial data, CAN bus data payloads, Ethernet packets, Serial Advanced Technology Attachment (SATA) bus memory payloads, and the like). The context layer understands how to take the application layer generic data, and formats it, parses it if necessary, and controls its flow through the low-level device driver layer.

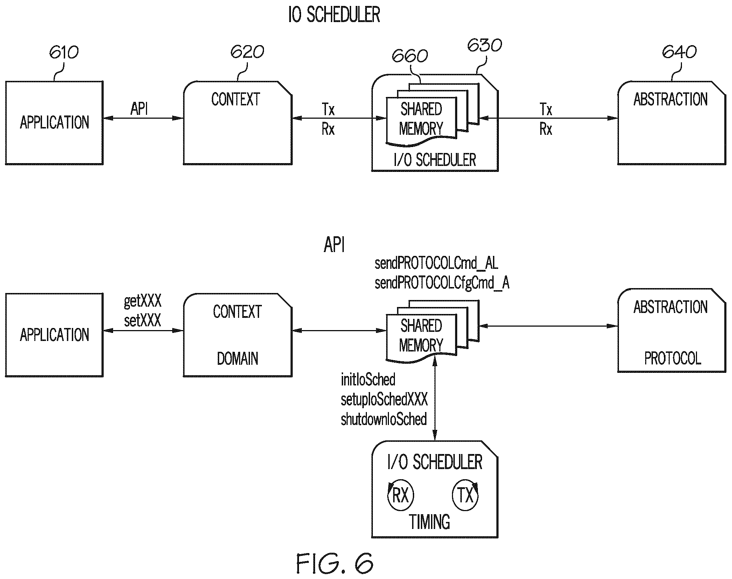

FIG. 6 depicts exemplary software layers of the computing device 120 (FIG. 1) in one or more embodiments, including an application layer 610, a context layer 620, an I/O scheduler layer 630, and an abstraction layer 640. The I/O scheduler layer contains a shared memory 660. The application layer 610 may be connected to the context layer 620 via an API. When the application layer 610 communicates with the context layer 520, the application layer 510 may not know what type of interface it is communicating with. The application layer 610 may be requesting data of a certain type and may request the data from a certain perspective (e.g., provide airspeed in m/s). A difference between the present example of FIG. 6 and the example of FIG. 5 is the inclusion of the I/O scheduler layer. That is, in the example of FIG. 5, the requested data may move from the abstraction layer 540 to the context layer 520 to the application layer 510. However, in the example of FIG. 6, the data is coming through the I/O scheduler layer 630, which takes care of the timing. For example, the application layer may be expecting the data on a certain rhythm, but the processor its running on can be running at a different speed, so the I/O scheduler maintains the expected application timing as opposed to an execution application timing. Accordingly, the data can come back through I/O scheduler which can make sure the context layer 620 gets the data and subsequently the application layer gets the data at the time it expects it to be there. As opposed to the time the data would otherwise arrive at the application layer (e.g., 1/2 time, 1/3 time, etc.), the I/O scheduler layer 630 makes sure the data is available when context layer 620 needs it. Accordingly, it may be possible for the I/O scheduler to handle multiple component types with multiple timing constraints.

In one or more embodiments, instead of interfacing directly with the low-level device driver layer, the context layer moves data to/from the I/O scheduler layer. The I/O scheduler may directly control the low-level device driver layer. When both a context layer and an I/O scheduler layer are deployed, the processor execution is decoupled from system I/O timing with the I/O scheduler and the processor data constructs are defined without needing to conform to the data format of the actual I/O protocol format. In one or more embodiments, the I/O scheduler may be implemented via hardware and/or software. Examples of such hardware include, but are not limited to a multi-core processor, a microcontroller, a field-programmable gate array (FPGA), or an application-specific integrated circuit (ASIC). In some embodiments, the loading of the I/O schedule can be done at any layer (e.g., application layer, context layer, OS layer, and the like). In one or more embodiments, the timing schedule may be generated as part of the creation or definition of the system. This timing schedule generation is accomplished via a process that maps the application timing needs to the available system I/O resources and to the external and internal system timing requirements to create the schedule. In one or more embodiments, the process may be aided by a scheduling tool. Once generated, the schedule is deployed as part of the system (e.g., within the I/O scheduler). In one or more embodiments, the I/O scheduler is the master, meaning everything else with respect to I/O is controlled by the I/O scheduler's timing schedule. In one or more embodiments, the I/O scheduler can provide an input or an output.

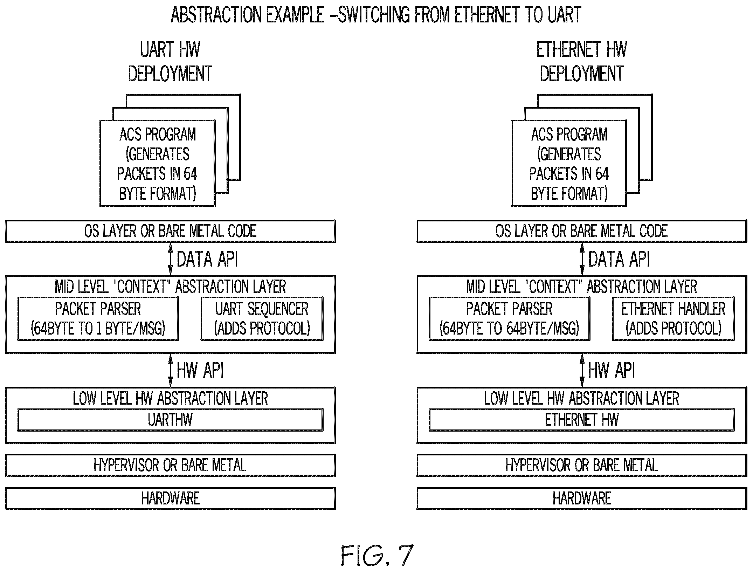

Nonlimiting detailed examples are presented below with reference to FIGS. 7-28.

One or more of the examples below illustrate dynamic loading of libraries. However, such illustration is merely an example, and it is to be understood that the present disclosure is not limited solely to dynamic loading of libraries. That is, in one or more embodiments, libraries may be statically compiled into the application. In some embodiments, a hybrid combination of statically compiled libraries and dynamically loaded libraries may be utilized. That is, certain component types may be built at compile time, and other component types may be loaded dynamically.

EXAMPLE 1: SWITCHING FROM ETHERNET TO UART: FIG. 7 schematically depicts a flow diagram of an illustrative example of operation of two types of abstraction layers to manage data traffic via Ethernet according to one or more embodiments shown and described herein. The application ACS (Application Communication System) begins with both the serial and Ethernet lines connected. The Ethernet line is the more frequently used communication method and is transmitting data. The Ethernet line is then disconnected. The serial bus that was previously connected between the two boards remains connected. When it is determined that the Ethernet link is no longer working, the context layer (was which was coded for this example) then proceeds to switch communication to the serial bus link. The application execution did not request a switch and did not otherwise know there had been switch other than knowing there was some amount of time that the application was not receiving data. The data begins to be transmitted back and forth via the serial bus. When the Ethernet line is reconnected, the context layer switched back to the Ethernet method, which is the more frequently used communication link, without any interruption of the application execution.

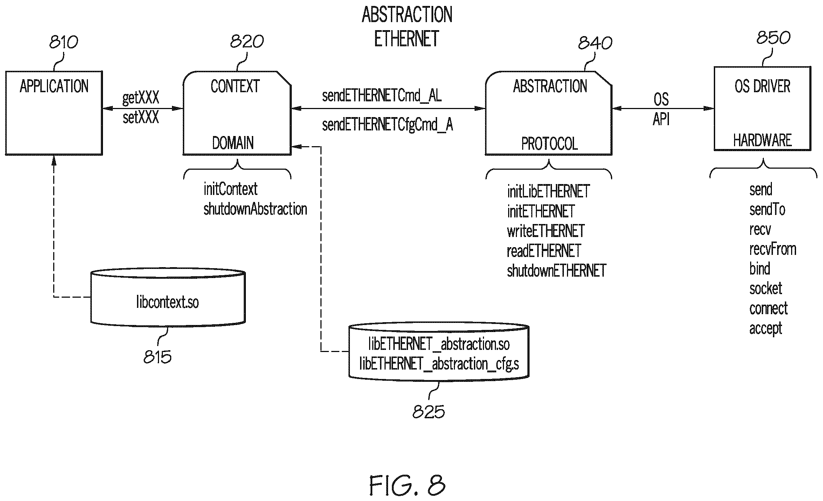

EXAMPLE 2-ETHERNET ABSTRACTION: FIG. 8 depicts a flow diagram of an illustrative method of providing an abstraction layer that manages data flow based on context for Ethernet hardware according to one or more embodiments shown and described herein. While this example assumes dynamic loading of libraries, the libraries may be statically compiled into the application for performance purposes. Exemplary software layers of the computing device 120 (FIG. 1) in one or more embodiments, include an application layer 810, a context layer 820, an abstraction layer 840 and an OS driver layer 850. In general, the expected flow is init (setup all memory and application software) -> run(handle get()/set()). The "init" phase includes, for example, loading libcontext.so, and calling initcontext(). The responsibility of initcontext() is to initialize all lower level libraries (initLibXXX and initXXX of libabstraction.so, if needed). An application database 815 and a context base 825 are also shown. The application layer 810 begins by loading a library libcontext.so from the application database 815, which may cause the application layer to call a function (e.g., call function "getXXX"), when needed. The request receiving logic 31a (FIG. 2A) e.g., may accomplish such processes. Still referring to FIG. 8, the context layer 820 fulfills the call getxxx, if called the context layer 820 then loads libraries (e.g., libETHERNET_abstraction.so and libETHERNET_abstraction_cfg.so) from the context base 825. Between these two libraries, the context layer 820 knows what Ethernet device it may be communicating with, and what driver is needed to communicate with the specific Ethernet device based on the hardware. The context layer 820 can then call an Ethernet command (e.g., sendETHERNETCmd_AL) and a config command (e.g., sendETHERNETCfgCmd_A), which can set up the device and then call a protocol command (e.g., readETHERNET) from the abstraction layer 840. The protocol command can then call a hardware command (e.g., recv) from the OS driver layer 850. The abstraction layer 840 can then receive the data and send the data to the context layer 820 via the Ethernet command. The context layer 820 can then perform whatever conversions (e.g., determinations) are needed and then send the data back to the application layer 810.

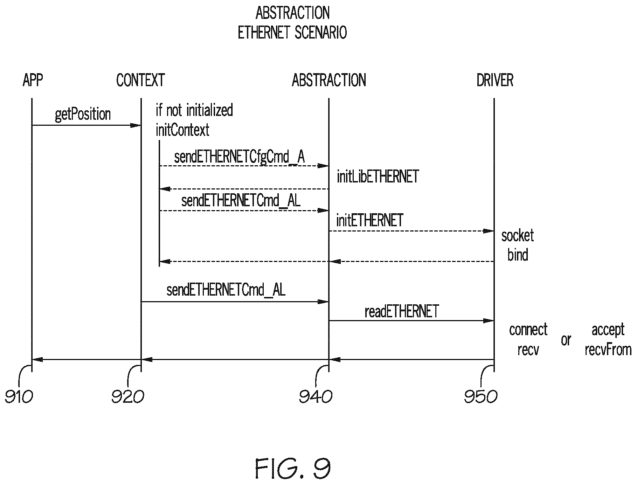

EXAMPLE 3: ETHERNET ABSTRACTION HANDSHAKING: FIG. 9 depicts a flow diagram of an illustrative method of utilizing an abstraction layer for managing data flow via Ethernet hardware according to one or more embodiments shown and described herein. Exemplary software layers of the computing device 120 in one or more embodiments, include an application layer 910, a context layer 920, an abstraction layer 940 and an OS driver layer 950. This example presents the relationship between the layers in a "data handshaking" context. In general, data handshaking includes having a processor to wait for the "handshake" before proceeding with any other code. It is the most responsive way to service an I/O but has a performance implication as it wastes general processing bandwidth.

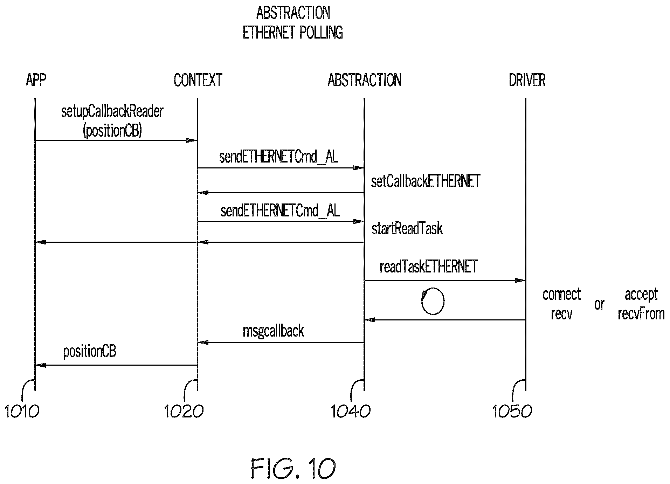

EXAMPLE 4: ETHERNET ABSTRACTION POLLING: FIG. 10 depicts a flow diagram of an illustrative method of utilizing an abstraction layer for the purposes of polling via Ethernet hardware according to one or more embodiments shown and described herein. Exemplary software layers of the computing device 120 in one or more embodiments, include an application layer 1010, a context layer 1020, an abstraction layer 1040 and an OS driver layer 1050. In general, polling includes a processor sampling an I/O periodically to see if it has completed its task. Polling is not as responsive as data handshaking (e.g., because the I/O may have completed its task well before it was polled to see that it was done), but polling allows other processing to proceed in between "polls."

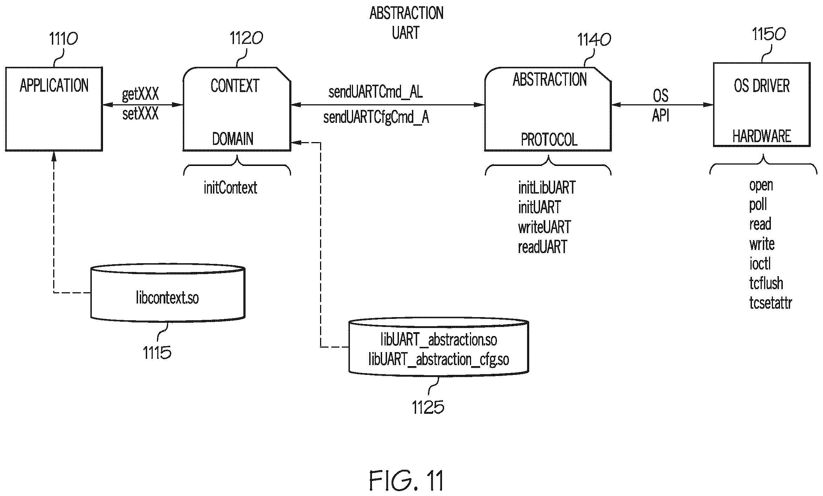

EXAMPLE 5: UART ABSTRACTION: FIG. 11 depicts a flow diagram of an illustrative method of providing an abstraction layer that manages data based on context for a Universal Asynchronous Receiver/Transmitter (UART) according to one or more embodiments shown and described herein. While this example assumes dynamic loading of libraries, the libraries may be statically compiled into the application for performance purposes. Exemplary software layers of the computing device 120 in one or more embodiments, include an application layer 1110, a context layer 1120, an abstraction layer 1140 and an OS driver layer 1150. An application database 1115 and a context base 1125 are also shown. In general, the expected flow is init (setup all memory and application software) -> run(handle get()/set()). The "init" phase includes, for example, loading libcontext.so, and calling initcontext(). The responsibility of initcontext() is to initialize all lower level libraries (initLibXXX and initXXX of libabstraction.so, if needed). The application layer 1110 begins by loading a library libcontext.so from the application database 1115, which may cause the application layer to call a function (e.g., call function "getXXX"). The context layer 1120 fulfills the call getxxx, if called. The context layer 1120 then loads libraries (e.g., libUART_abstraction.so and libUART_abstraction_cfg.so) from the context base 1125. Between these two libraries, the context layer 1120 knows what UART device it maybe communicating with, and what driver is needed to communicate with the specific UART device based on the hardware. The context layer 1120 can then call a UART command (e.g., sendUARTCmd_AL) and a config command (e.g., sendUARTCfgCmd_A), which can set up the device and then call a protocol command (e.g., readUART) from the abstraction layer 1140. The protocol command can then call a hardware command (e.g., read) from the OS driver layer 1150. The abstraction layer 1140 can then receive the data and send the data to the context layer 1120 via the UART command. The context layer 1120 can then perform whatever conversions (e.g., determinations) are needed and then send the data back to the application layer 1110.

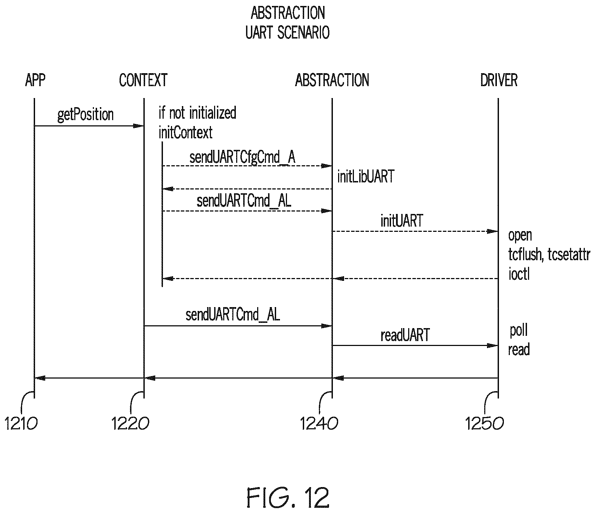

EXAMPLE 6: UART ABSTRACTION HANDSHAKING: FIG. 12 depicts a flow diagram of an illustrative method of utilizing an abstraction layer for the purposes of managing data flow via UART according to one or more embodiments shown and described herein. Exemplary software layers of the computing device 120 in one or more embodiments, include an application layer 1210, a context layer 1220, an abstraction layer 1240 and an OS driver layer 1250. This example presents the relationship between the layers in a "data handshaking" context.

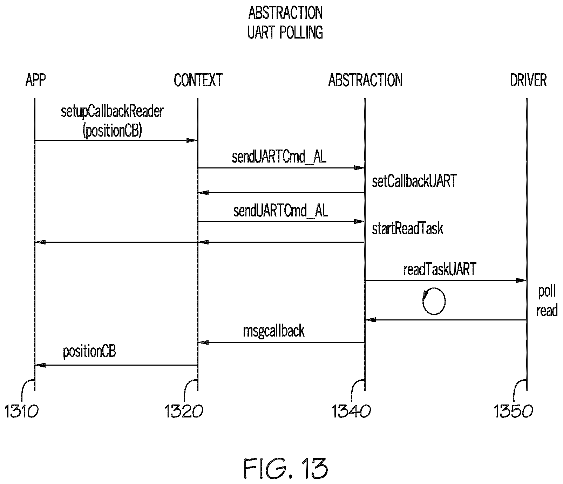

EXAMPLE 7: UART ABSTRACTION POLLING: FIG. 13 depicts a flow diagram of an illustrative method of utilizing an abstraction layer for the purposes of polling via UART according to one or more embodiments shown and described herein. Exemplary software layers of the computing device 120 in one or more embodiments, include an application layer 1310, a context layer 1320, an abstraction layer 1340 and an OS driver layer 1350.

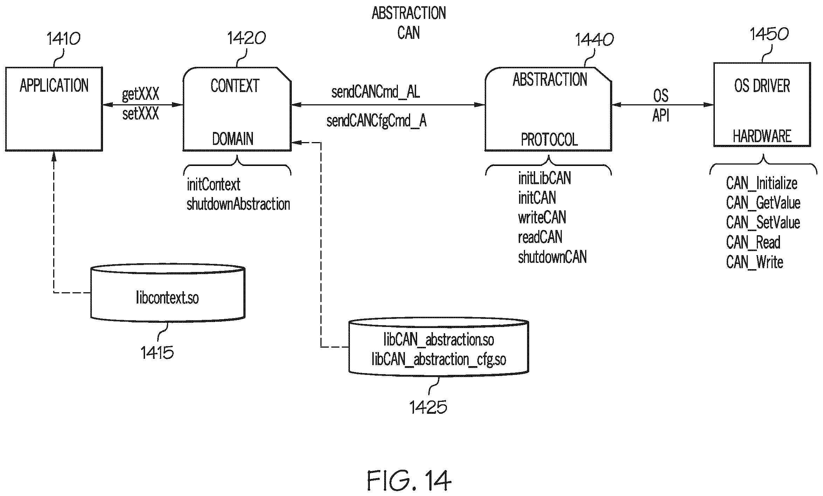

EXAMPLE 8: CAN ABSTRACTION: FIG. 14 depicts a flow diagram of an illustrative method of providing an abstraction layer that manages data based on context for Controller Area Network (CAN) hardware according to one or more embodiments shown and described herein. Exemplary software layers of the computing device 120 in one or more embodiments, include an application layer 1410, a context layer 1420, an abstraction layer 1440 and an OS driver layer 1450. An application database 1415 and a context base 1425 are also shown. In general, the expected flow is init (setup all memory and application software) -> run(handle get()/set()). The "init" phase includes, for example, loading libcontext.so, and calling initcontext(). The responsibility of initcontext() is to initialize all lower level libraries (initLibXXX and initXXX of libabstraction.so, if needed). The application layer 1410 begins by loading a library libcontext.so from the application database 1415, which may cause the application layer to call a function (e.g., call function "getxxx"), when needed. The context layer 1420 fulfills the call getxxx, if called the context layer 1420 then loads libraries (e.g., libCAN_abstraction.so and libCAN_abstraction_cfg.so) from the context base 1425. Between these two libraries, the context layer 1420 knows what CAN device it may be communicating with, and what driver is needed to communicate with the specific CAN device based on the hardware. The context layer 1420 can then call a CAN command (e.g., sendCANCmd_AL) and a config command (e.g., sendCANCfgCmd_A), which can set up the device and then call a protocol command (e.g., readCAN) from the abstraction layer 1440. The protocol command can then call a hardware command (e.g., CAN_read) from the OS driver layer 1450. The abstraction layer 1440 can then receive the data and send the data to the context layer 1420 via the CAN command. The context layer 1420 can then perform whatever conversions (e.g., determinations) are needed and then send the data back to the application layer 1410.

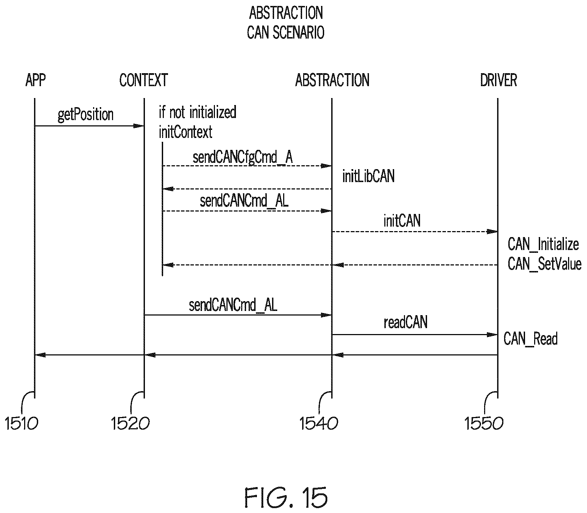

EXAMPLE 9: CAN ABSTRACTION HANDSHAKING: FIG. 15 depicts a flow diagram of an illustrative method of utilizing an abstraction layer for the purposes of managing data flow via CAN hardware according to one or more embodiments shown and described herein. Exemplary software layers of the computing device 120 in one or more embodiments, include an application layer 1510, a context layer 1520, an abstraction layer 1540 and an OS driver layer 1550. This example presents the relationship between the layers in a "data handshaking" context.

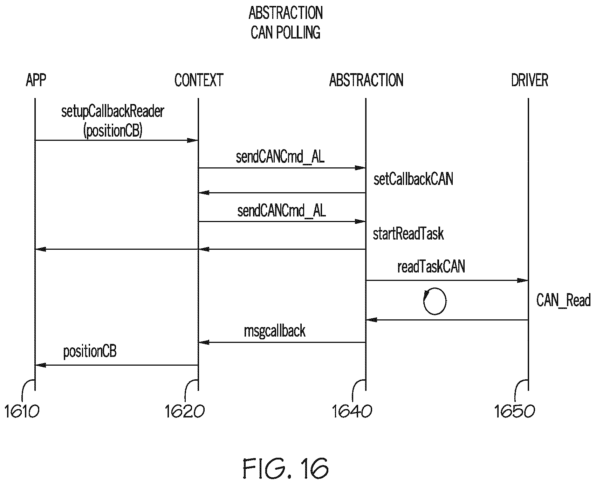

EXAMPLE 10: CAN ABSTRACTION POLLING: FIG. 16 depicts a flow diagram of an illustrative method of utilizing an abstraction layer for the purposes of polling via CAN hardware according to one or more embodiments shown and described herein. Exemplary software layers of the computing device 120 in one or more embodiments, include an application layer 1610, a context layer 1620, an abstraction layer 1640 and an OS driver layer 1650.

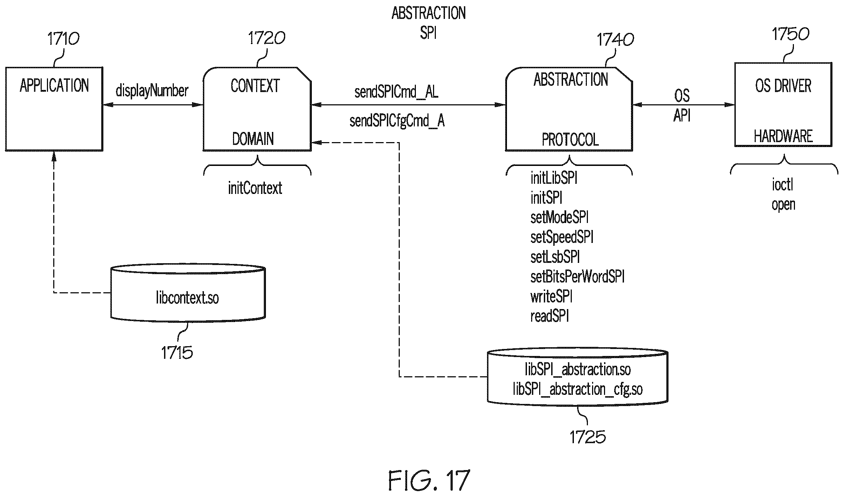

EXAMPLE 11: SPI ABSTRACTION: FIG. 17 depicts a flow diagram of an illustrative method of providing an abstraction layer that manages data based on context for Serial Peripheral Interface (SPI) hardware according to one or more embodiments shown and described herein. Exemplary software layers of the computing device 120 in one or more embodiments, include an application layer 1710, a context layer 1720, an abstraction layer 1740 and an OS driver layer 1750. An application database 1715 and a context base 1725 are also shown. In general, the expected flow is init (setup all memory and application software) -> run(handle get()/set()). The "init" phase includes, for example, loading libcontext.so, and calling initcontext(). The responsibility of initcontext() is to initialize all lower level libraries (initLibXXX and initXXX of libabstraction.so, if needed). The application layer 1710 begins by loading a library libcontext.so from the application database 1415, which may cause the application layer to call a function displayNumber, when needed. The context layer 1720 fulfills the call displayNumber, if called. The context layer 1720 then loads libraries (e.g., libSPI_abstraction.so and libSPI_abstraction_cfg.so) from the context base 1725. Between these two libraries, the context layer 1720 knows what SPI device it may be communicating with, and what driver is needed to communicate with the specific SPI device based on the hardware. The context layer 1720 can then call an SPI command (e.g., sendSPICmd_AL) and a config command (e.g., sendSPICfgCmd_A), which can set up the device and then call a protocol command (e.g., readSPI) from the abstraction layer 1740. The protocol command can then call a hardware command (e.g., open) from the OS driver layer 1750. The abstraction layer 1740 can then receive the data and send the data to the context layer 1720 via the SPI command. The context layer 1720 can then perform whatever conversions (e.g., determinations) are needed and then send the data back to the application layer 1710.

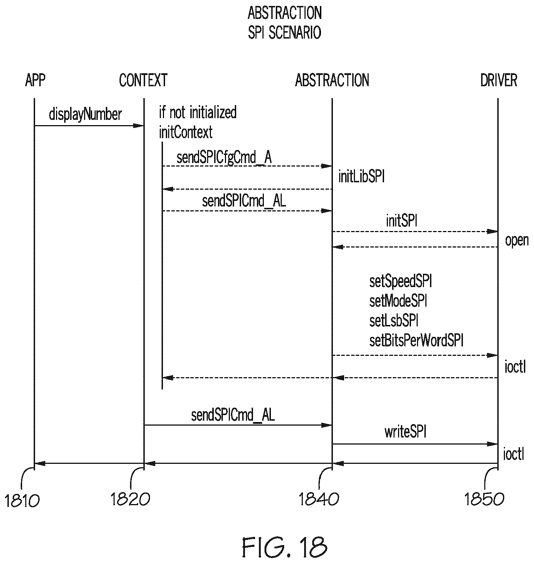

EXAMPLE 12: SPI ABSTRACTION HANDSHAKING: FIG. 18 depicts a flow diagram of an illustrative method of utilizing an abstraction layer for the purposes of managing data flow via SPI hardware according to one or more embodiments shown and described herein. Exemplary software layers of the computing device 120 in one or more embodiments, include an application layer 1810, a context layer 1820, an abstraction layer 1840 and an OS driver layer 1850. This example presents the relationship between the layers in a "data handshaking" context.

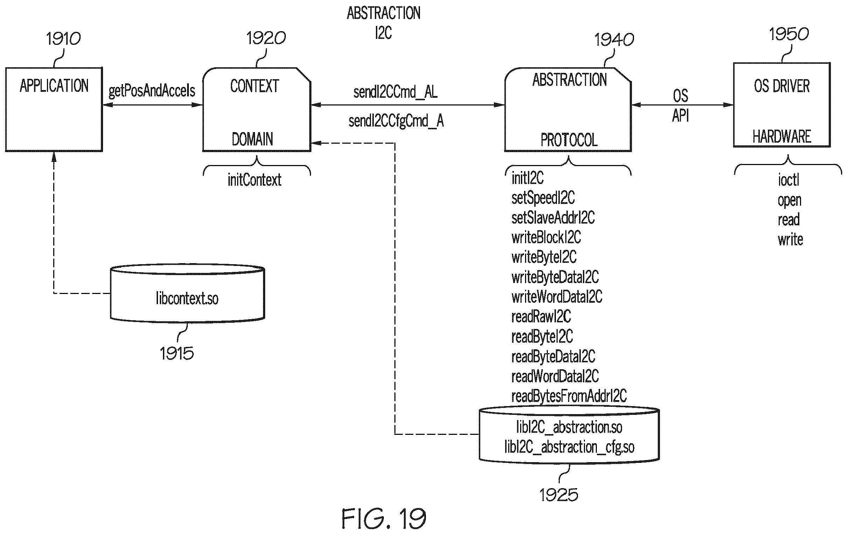

EXAMPLE 13: I2C ABSTRACTION: FIG. 19 depicts a flow diagram of an illustrative method of providing an abstraction layer that manages data based on context for inter-integrated circuit (I2C) hardware according to one or more embodiments shown and described herein. Exemplary software layers of the computing device 120 in one or more embodiments, include an application layer 1910, a context layer 1920, an abstraction layer 1940 and an OS driver layer 1950. An application database 1915 and a context base 1925 are also shown. The application layer 1910 begins by loading a library libcontext.so from the application database 1915, which may cause the application layer to call a function getPosAndAccels, when needed. The context layer 1920 fulfills the call getPosAndAccels, if called the context layer 1920 then loads libraries (e.g., libI2C_abstraction.so and libI2C_abstraction_cfg.so) from the context base 1925. Between these two libraries, the context layer 1920 knows what I2C device it may be communicating with, and what driver is needed to communicate with the specific I2C device based on the hardware. The context layer 1920 can then call an I2C command (e.g., sendI2CCmd_AL) and a config command (e.g., sendI2CCfgCmd_A), which can set up the device and then call a protocol command (e.g., readByteI2C) from the abstraction layer 1940. The protocol command can then call a hardware command (e.g., read) from the OS driver layer 1950. The abstraction layer 1940 can then receive the data and send the data to the context layer 1920 via the I2C command. The context layer 1920 can then perform whatever conversions (e.g., determinations) are needed and then send the data back to the application layer 1910.

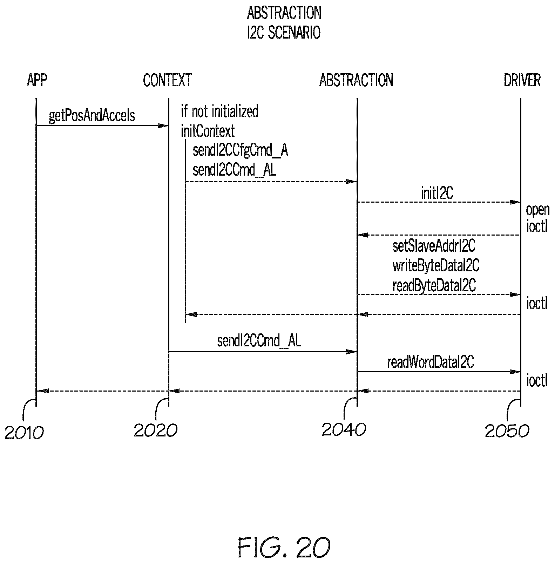

EXAMPLE 14: I2C ABSTRACTION HANDSHAKING: FIG. 20 depicts a flow diagram of an illustrative method of utilizing an abstraction layer for the purposes of managing data flow via I2C hardware according to one or more embodiments shown and described herein. Exemplary software layers of the computing device 120 in one or more embodiments, include an application layer 2010, a context layer 2020, an abstraction layer 2040 and an OS driver layer 2050. This example presents the relationship between the layers in a "data handshaking" context.

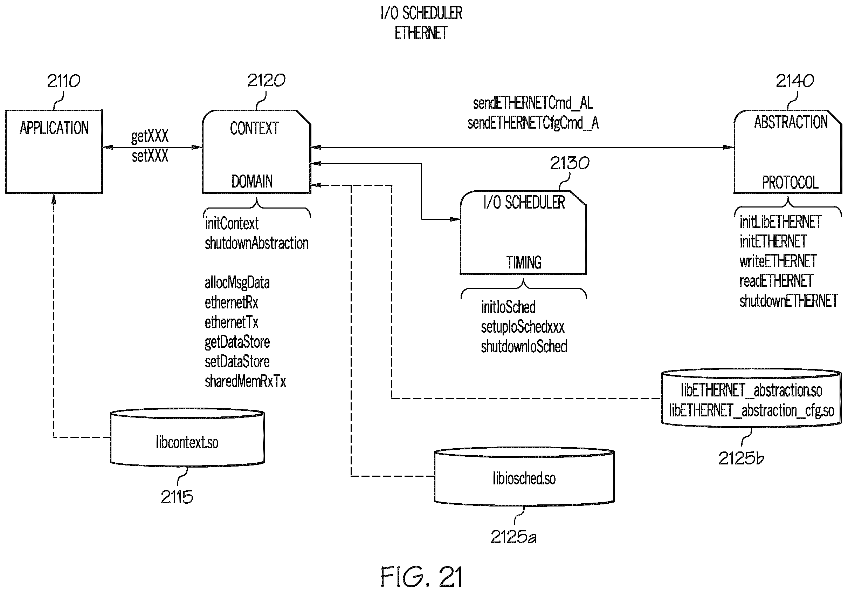

EXAMPLE 15: I/O SCHEDULER ETHERNET: FIG. 21 depicts a flow diagram of an illustrative method of providing an abstraction layer that manages data flow based on context and timing for Ethernet hardware according to one or more embodiments shown and described herein. Exemplary software layers of the computing device 120 in one or more embodiments, include an application layer 2110, a context layer 2120, an I/O Scheduler layer 2130 and an abstraction layer 2140. An application database 2115, a context base 2125a and a context base 2125b are also shown.

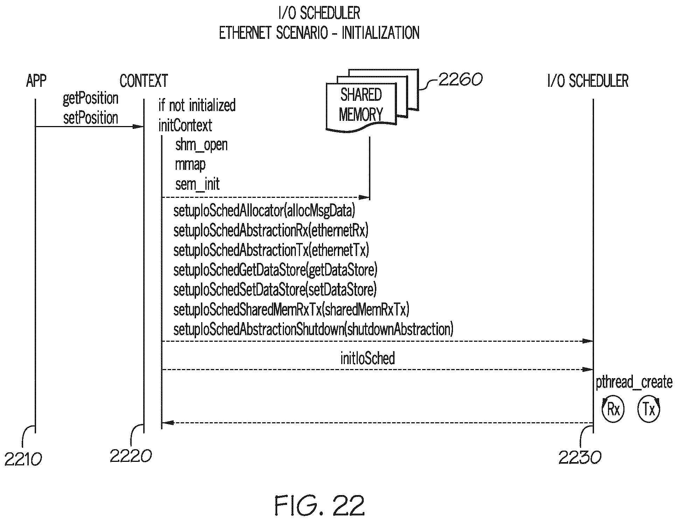

EXAMPLE 16: I/O SCHEDULER ETHERNET SCENARIO-INITIALIZATION: FIG. 22 depicts a flow diagram of an illustrative method of utilizing an abstraction layer for initializing data flow via Ethernet hardware based on context and timing according to one or more embodiments shown and described herein. Exemplary software layers of the computing device 120 in one or more embodiments, include an application layer 2210, a context layer 2220, and an I/O scheduler layer 2230. A shared memory 2260 is also depicted.

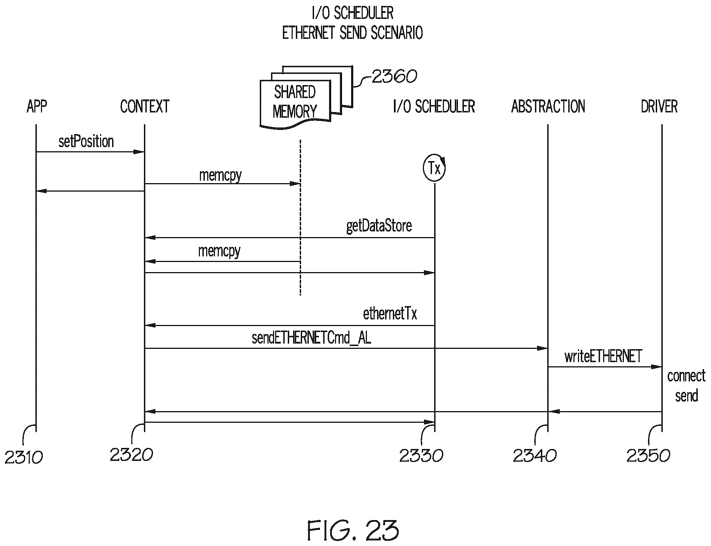

EXAMPLE 17: I/O SCHEDULER ETHERNET SEND SCENARIO: FIG. 23 depicts a flow diagram of an illustrative method of utilizing an abstraction layer for transmitting data via Ethernet hardware based on context and timing according to one or more embodiments shown and described herein. Exemplary software layers of the computing device 120 in one or more embodiments, include an application layer 2310, a context layer 2320, an I/O scheduler layer 2330, an abstraction layer 2340 and an OS driver layer 2350. A shared memory 2360 is also depicted.

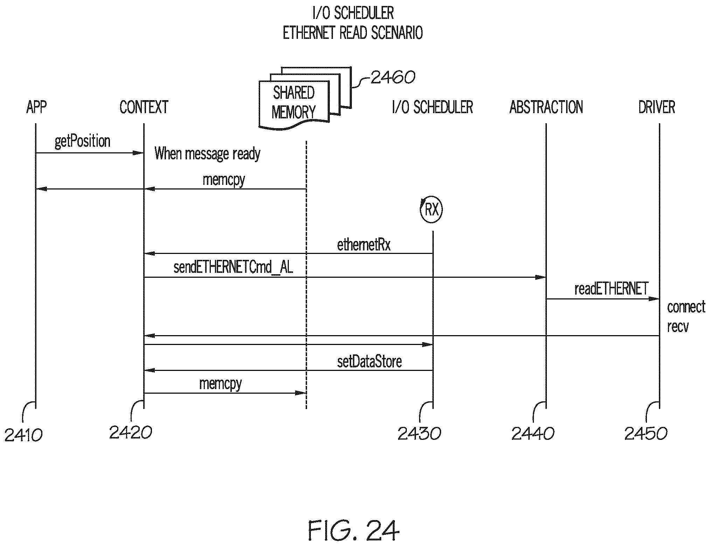

EXAMPLE 18: I/O SCHEDULER ETHERNET READ SCENARIO: FIG. 24 depicts a flow diagram of an illustrative method of utilizing an abstraction layer for reading data via Ethernet hardware based on context and timing according to one or more embodiments shown and described herein. Exemplary software layers of the computing device 120 in one or more embodiments, include an application layer 2410, a context layer 2420, an I/O scheduler layer 2430, an abstraction layer 2440 and an OS driver layer 2450. A shared memory 2460 is also depicted.

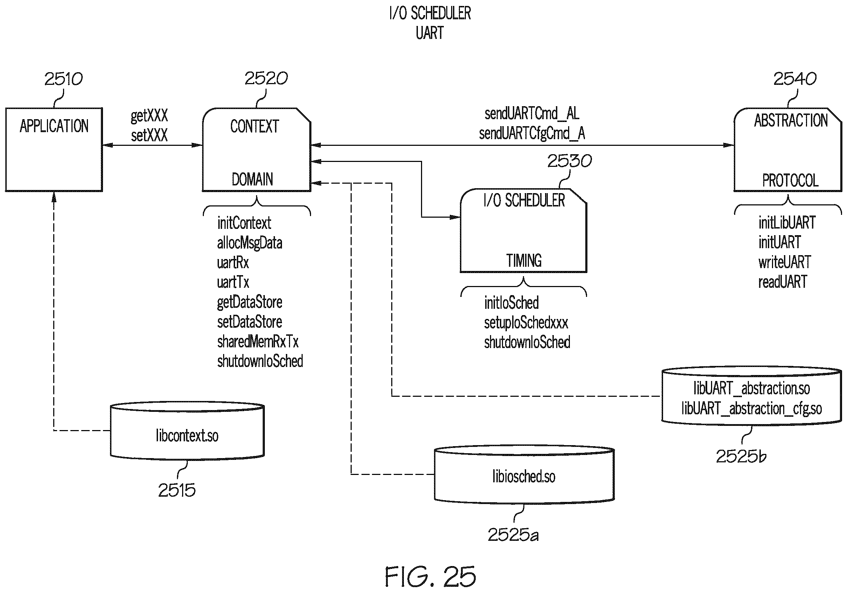

EXAMPLE 19: I/O SCHEDULER UART: FIG. 25 depicts a flow diagram of an illustrative method of providing an abstraction layer that manages data flow based on context and timing for UART hardware according to one or more embodiments shown and described herein. Exemplary software layers of the computing device 120 in one or more embodiments, include an application layer 2510, a context layer 2520, an I/O Scheduler layer 2530 and an abstraction layer 2540. An application database 2515, a context base 2525a and a context base 2525b are also shown.

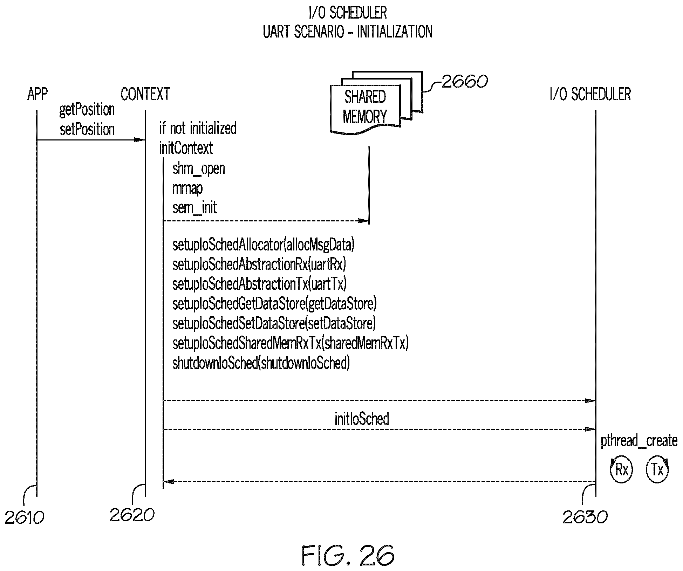

EXAMPLE 20: I/O SCHEDULER UART SCENARIO-INITIALIZATION: FIG. 26 depicts a flow diagram of an illustrative method of utilizing an abstraction layer for initializing data flow via UART hardware based on context and timing according to one or more embodiments shown and described herein. Exemplary software layers of the computing device 120 in one or more embodiments, include an application layer 2610, a context layer 2620, and an I/O scheduler layer 2630. A shared memory 2660 is also depicted.

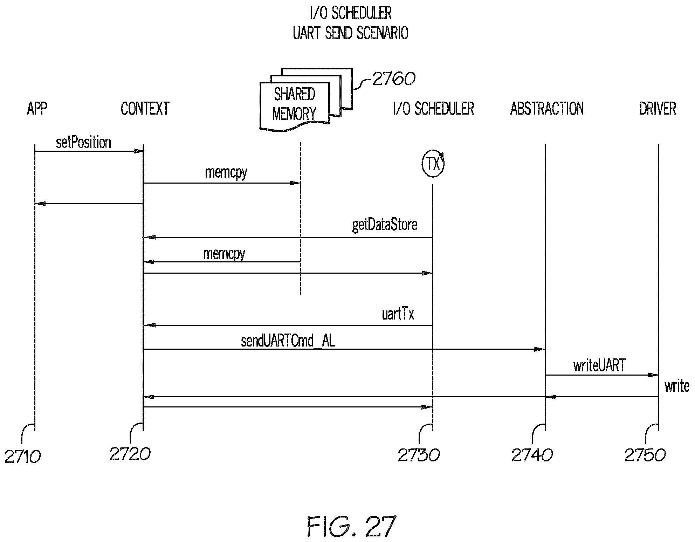

EXAMPLE 21: I/O SCHEDULER UART SEND SCENARIO: FIG. 27 depicts a flow diagram of an illustrative method of utilizing an abstraction layer for transmitting data via UART hardware based on context and timing according to one or more embodiments shown and described herein. Exemplary software layers of the computing device 120 in one or more embodiments, include an application layer 2710, a context layer 2720, an I/O scheduler layer 2730, an abstraction layer 2740 and an OS driver layer 2750. A shared memory 2760 is also depicted.

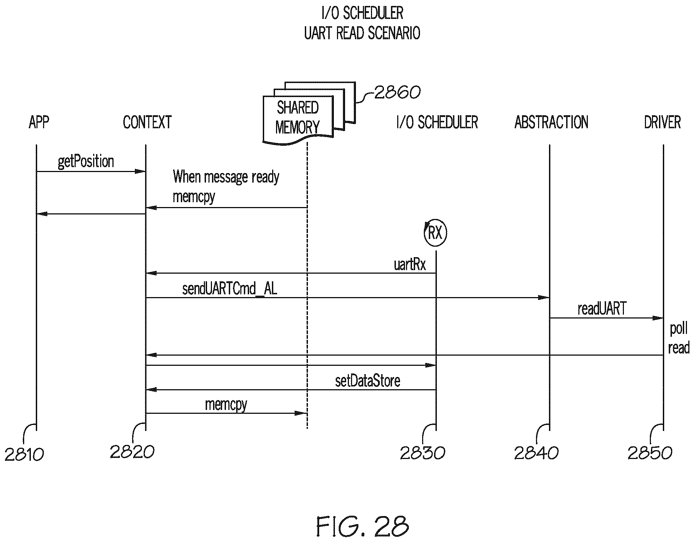

EXAMPLE 22: I/O SCHEDULER UART READ SCENARIO: FIG. 28 depicts a flow diagram of an illustrative method of utilizing an abstraction layer for reading data via UART hardware based on context and timing according to one or more embodiments shown and described herein. Exemplary software layers of the computing device 120 in one or more embodiments, include an application layer 2810, a context layer 2820, an I/O scheduler layer 2830, an abstraction layer 2840 and an OS driver layer 2850. A shared memory 2860 is also depicted.

As described in detail above, embodiments are directed to systems and methods for providing an abstraction layer between an application layer and one or more hardware components of an electronic device, particularly electronic devices that incorporate a real time operating system (RTOS). The abstraction layer allows for modification of hardware components in the electronic device without revisions to software located within the application layer of the device.

While particular embodiments have been illustrated and described herein, it should be understood that various other changes and modifications may be made without departing from the scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A method (300) of providing an abstraction layer between an application layer and one or more existing hardware components of a computing device, the method comprising:
receiving (302) a request for a resource from the application layer, the application layer being stored in a non-transitory medium of the computing device;
determining (312) a component type and a timing for performing a task according to the request for the resource;
determining (314) whether the one or more existing hardware components of the computing device correspond to the component type for performing the task based on a predetermined function of the one or more existing hardware components;
obtaining (315), based on the timing, a timing schedule for providing a response to the request according to the timing;
when the one or more existing hardware components of the computing device do not correspond to the component type for performing the task and have a hardware timing that does not correspond to the timing schedule:
converting (320) the task into a translated task readable by the one or more existing hardware components;
providing (322) the translated task and the timing schedule to an input/output, I/O, scheduler, the I/O scheduler interfacing with the one or more existing hardware components to generate an input or an output;
receiving (324) an input or an output from the I/O scheduler as a result of providing the translated task, and
providing (326) the input or the output to the application layer as an emulated input or an emulated output that mimics an expected input or an expected output of the component type with the timing

2. The method of claim 1, further comprising:
when a first hardware component of the one or more existing hardware components does not correspond to the component type:
determining (316) that a second hardware component of the one or more existing hardware components is capable of performing the task as an alternative to the first hardware component,
providing the task to the second hardware component,
receiving an output from the second hardware component as a result of providing the task, and
providing the output to the application layer.

3. The method of claim 1 or claim 2, wherein determining whether the one or more existing hardware components of the computing device correspond to the component type for performing the task comprises:
transmitting a driver information request to a hardware device driver layer, the driver information request corresponding to the one or more existing hardware components;
receiving driver information from the hardware device driver layer, the driver information corresponding to a set of functions of the one or more existing hardware components; and
determining one or more functions of the set of functions that corresponds to the component type.

4. The method of claim 1 or claim 2, wherein determining whether the one or more existing hardware components of the computing device correspond to the component type for performing the task comprises determining whether one or more components of a real-time control system correspond to the component type for performing the task.

5. The method of claim 1 or claim 2, wherein determining whether the one or more existing hardware components of the computing device correspond to the component type for performing the task comprises one of:
determining whether one or more components of a medical device control system correspond to the component type for performing the task;
determining whether one or more components of a power turbine control system correspond to the component type for performing the task; and
determining whether one or more components of a factory control system correspond to the component type for performing the task.

6. The method of any preceding claim, wherein the timing schedule maps the timing to an available system I/O resource and/or to external and internal system timing requirements.

7. The method of any preceding claim, wherein providing the input or the output to the application layer as the emulated input or the emulated output comprises delaying transmission of one or more portions of the input or the output in accordance with the timing.

8. The method of any preceding claim, further comprising:
when a first hardware component of the one or more existing hardware components does not have a hardware timing that corresponds to the timing schedule:
determining that a second hardware component of the one or more existing hardware components has a hardware timing that corresponds to the timing schedule,
providing the task to the second hardware component,
receiving an input or an output from the second hardware component as a result of providing the task, and
providing the input or the output to the application layer.

9. The method of any preceding claim, further comprising:
determining whether the one or more existing hardware components of the computing device have a hardware timing that does not correspond to the timing schedule.

10. The method of claim 9, wherein determining whether the one or more existing hardware components of the computing device have a hardware timing that does not correspond to the timing schedule comprises:
transmitting a driver information request to a hardware device driver layer, the driver information request corresponding to the one or more existing hardware components; and
receiving driver information from the hardware device driver layer, the driver information corresponding to a hardware timing of the one or more existing hardware components.

11. The method of any preceding claim, wherein providing the task and the timing schedule to the I/O scheduler comprises providing the task and timing schedule to an I/O scheduler having an independent clock having a clock rate that is independent of a clock rate of the one or more existing hardware components.

12. The method of any preceding claim, wherein providing the task and the timing schedule to the I/O scheduler comprises providing the task and timing schedule to a hardware based I/O scheduler.

13. The method of any preceding claim, wherein providing the task and the timing schedule to the I/O scheduler comprises providing the task and timing schedule to a software based I/O scheduler.

14. The method of any one of claims 1-13, wherein determining the component type for performing the task comprises determining a context of the request.

## Patentansprüche

1. Verfahren (300) zum Bereitstellen einer Abstraktionsschicht zwischen einer Anwendungsschicht und einer oder mehreren vorhandenen Hardwarekomponenten einer Rechenvorrichtung, das Verfahren umfassend:
Empfangen (302) einer Anforderung für eine Ressource von der Anwendungsschicht, wobei die Anwendungsschicht in einem nichtflüchtigen Medium der Rechenvorrichtung gespeichert ist;
Bestimmen (312) eines Komponententyps und einer Zeiteinstellung zum Durchführen einer Aufgabe gemäß der Anforderung für die Ressource;
Bestimmen (314), ob die eine oder die mehreren vorhandenen Hardwarekomponenten der Rechenvorrichtung dem Komponententyp zum Durchführen der Aufgabe entsprechen, basierend auf einer zuvor bestimmten Funktion der einen oder der mehreren vorhandenen Hardwarekomponenten;
Erhalten (315), basierend auf der Zeiteinstellung, eines Zeiteinstellungsplans zum Bereitstellen einer Antwort auf die Anforderung gemäß der Zeiteinstellung;
wenn die eine oder die mehreren vorhandenen Hardwarekomponenten der Rechenvorrichtung nicht dem Komponententyp zum Durchführen der Aufgabe entsprechen und eine Hardware-Zeiteinstellung aufweisen, die nicht dem Zeiteinstellungsplan entspricht:
Umwandeln (320) der Aufgabe in eine übersetzte Aufgabe, die durch die eine oder die mehreren vorhandenen Hardwarekomponenten lesbar ist;
Bereitstellen (322) der übersetzten Aufgabe und des Zeiteinstellungsplans an einen Eingabe/Ausgabe-Scheduler, E/A-Scheduler, wobei der E/A-Scheduler mit der einen oder den mehreren vorhandenen Hardwarekomponenten eine Schnittstelle bildet, um eine Eingabe oder eine Ausgabe zu erzeugen;
Empfangen (324) einer Eingabe oder einer Ausgabe von dem E/A-Scheduler als ein Ergebnis des Bereitstellens der übersetzten Aufgabe und
Bereitstellen (326) der Eingabe oder der Ausgabe an die Anwendungsschicht als eine emulierte Eingabe oder eine emulierte Ausgabe, die eine erwartete Eingabe oder eine erwartete Ausgabe des Komponententyps mit der Zeiteinstellung imitiert.

2. Verfahren nach Anspruch 1, ferner umfassend:
wenn eine erste Hardwarekomponente der einen oder der mehreren vorhandenen Hardwarekomponenten nicht dem Komponententyp entspricht:
Bestimmen (316), dass eine zweite Hardwarekomponente der einen oder der mehreren vorhandenen Hardwarekomponenten in der Lage ist, die Aufgabe als eine Alternative zu der ersten Hardwarekomponente durchzuführen,
Bereitstellen der Aufgabe an die zweite Hardwarekomponente,
Empfangen einer Ausgabe von der zweiten Hardwarekomponente als ein Ergebnis des Bereitstellens der Aufgabe und
Bereitstellen der Ausgabe an die Anwendungsschicht.

3. Verfahren nach Anspruch 1 oder 2, wobei das Bestimmen, ob die eine oder die mehreren vorhandenen Hardwarekomponenten der Rechenvorrichtung dem Komponententyp zum Durchführen der Aufgabe entsprechen, umfasst:
Übertragen einer Treiberinformationsanforderung an eine Hardwarevorrichtungstreiberschicht, wobei die Treiberinformationsanforderung der einen oder den mehreren vorhandenen Hardwarekomponenten entspricht;
Empfangen von Treiberinformationen von der Hardwarevorrichtungstreiberschicht, wobei die Treiberinformationen einem Satz von Funktionen der einen oder der mehreren vorhandenen Hardwarekomponenten entsprechen; und
Bestimmen einer oder mehrerer Funktionen des Satzes von Funktionen, der dem Komponententyp entspricht.

4. Verfahren nach Anspruch 1 oder 2, wobei das Bestimmen, ob die eine oder die mehreren vorhandenen Hardwarekomponenten der Rechenvorrichtung dem Komponententyp zum Durchführen der Aufgabe entsprechen, das Bestimmen umfasst, ob eine oder mehrere Komponenten eines Echtzeitsteuersystems dem Komponententyp zum Durchführen der Aufgabe entsprechen.

5. Verfahren nach Anspruch 1 oder 2, wobei das Bestimmen, ob die eine oder die mehreren vorhandenen Hardwarekomponenten der Rechenvorrichtung dem Komponententyp zum Durchführen der Aufgabe entsprechen, eines umfasst von:
Bestimmen, ob eine oder mehrere Komponenten eines Steuersystems für medizinische Vorrichtungen dem Komponententyp zum Durchführen der Aufgabe entsprechen;
Bestimmen, ob eine oder mehrere Komponenten eines Arbeitsturbinensteuersystems dem Komponententyp zum Durchführen der Aufgabe entsprechen; und
Bestimmen, ob eine oder mehrere Komponenten eines Werksteuersystems dem Komponententyp zum Durchführen der Aufgabe entsprechen.

6. Verfahren nach einem der vorstehenden Ansprüche, wobei der Zeiteinstellungsplan die Zeiteinstellung auf eine verfügbare System-E/A-Ressource und/oder auf externe und interne Systemzeiteinstellungserfordernisse abbildet.

7. Verfahren nach einem der vorstehenden Ansprüche, wobei das Bereitstellen der Eingabe oder der Ausgabe an die Anwendungsschicht als die emulierte Eingabe oder die emulierte Ausgabe ein Verzögern einer Übertragung eines oder mehrerer Abschnitte der Eingabe oder der Ausgabe gemäß der Zeiteinstellung umfasst.

8. Verfahren nach einem der vorstehenden Ansprüche, ferner umfassend:
wenn eine erste Hardwarekomponente der einen oder der mehreren vorhandenen Hardwarekomponenten keine Hardware-Zeiteinstellung aufweist, die dem Zeiteinstellungsplan entspricht:
Bestimmen, dass eine zweite Hardwarekomponente der einen oder der mehreren vorhandenen Hardwarekomponenten eine Hardware-Zeiteinstellung aufweist, die der Zeiteinstellung entspricht,
Bereitstellen der Aufgabe an die zweite Hardwarekomponente,
Empfangen einer Eingabe oder einer Ausgabe von der zweiten Hardwarekomponente als ein Ergebnis des Bereitstellens der Aufgabe und
Bereitstellen der Eingabe oder der Ausgabe an die Anwendungsschicht.

9. Verfahren nach einem der vorstehenden Ansprüche, ferner umfassend:
Bestimmen, ob die eine oder die mehreren vorhandenen Hardwarekomponenten der Rechenvorrichtung eine Hardware-Zeiteinstellung aufweisen, die nicht dem Zeiteinstellungsplan entspricht.

10. Verfahren nach Anspruch 9, wobei das Bestimmen, ob die eine oder die mehreren vorhandenen Hardwarekomponenten der Rechenvorrichtung eine Hardware-Zeiteinstellung aufweisen, die nicht dem Zeiteinstellungsplan entspricht, umfasst:
Übertragen einer Treiberinformationsanforderung an eine Hardwarevorrichtungstreiberschicht, wobei die Treiberinformationsanforderung der einen oder den mehreren vorhandenen Hardwarekomponenten entspricht; und
Empfangen von Treiberinformationen von der Hardwarevorrichtungstreiberschicht, wobei die Treiberinformationen einer Hardware-Zeiteinstellung der einen oder der mehreren vorhandenen Hardwarekomponenten entsprechen.

11. Verfahren nach einem der vorstehenden Ansprüche, wobei das Bereitstellen der Aufgabe und des Zeiteinstellungsplans an den E/A-Scheduler das Bereitstellen der Aufgabe und des Zeiteinstellungsplans an einen E/A-Scheduler umfasst, der einen unabhängigen Taktgeber aufweist, der ein Taktgebermaß aufweist, das von eine Taktgebermaß der einen oder der mehreren vorhandenen Hardwarekomponenten unabhängig ist.

12. Verfahren nach einem der vorstehenden Ansprüche, wobei das Bereitstellen der Aufgabe und des Zeiteinstellungsplans an den E/A-Scheduler das Bereitstellen der Aufgabe und des Zeiteinstellungsplans an einen hardwarebasierten E/A-Scheduler umfasst.

13. Verfahren nach einem der vorstehenden Ansprüche, wobei das Bereitstellen der Aufgabe und des Zeiteinstellungsplans an den E/A-Scheduler das Bereitstellen der Aufgabe und des Zeiteinstellungsplans an einen softwarebasierten E/A-Scheduler umfasst.

14. Verfahren nach einem der Ansprüche 1 bis 13, wobei das Bestimmen des Komponententyps zum Durchführen der Aufgabe das Bestimmen eines Kontexts der Anforderung umfasst.

## Revendications

1. Procédé (300) destiné à la fourniture d'une couche d'abstraction entre une couche d'application et un ou plusieurs composants matériels existants d'un dispositif informatique, le procédé comprenant :
la réception (302) d'une demande pour une ressource en provenance de la couche d'application, la couche d'application étant stockée dans un support non transitoire du dispositif informatique ;
la détermination (312) d'un type de composant et d'une synchronisation pour mettre en oeuvre une tâche selon la demande pour la ressource ;
le fait de déterminer (314) si le ou les ou composants matériels existants du dispositif informatique correspondent au type de composant pour mettre en oeuvre la tâche sur la base d'une fonction prédéterminée du ou des composants matériels existants ;
l'obtention (315), sur la base de la synchronisation, d'une planification de synchronisation pour fournir une réponse à la demande selon la synchronisation ;
lorsque le ou les composants matériels existants du dispositif informatique ne correspondent pas au type de composant pour mettre en oeuvre la tâche et ont une synchronisation matérielle qui ne correspond pas à la planification de synchronisation :
la conversion (320) de la tâche en une tâche traduite lisible par le ou les composants matériels existants ;
la fourniture (322) de la tâche traduite et de la planification de synchronisation à un planificateur d'entrée/sortie, E/S, le planificateur E/S s'interfaçant avec le ou les composants matériels existants pour générer une entrée ou une sortie ;
la réception (324) d'une entrée ou d'une sortie en provenance du planificateur E/S en conséquence de la fourniture de la tâche traduite, et
la fourniture (326) de l'entrée ou de la sortie à la couche d'application en tant qu'entrée émulée ou sortie émulée qui imite une entrée attendue ou une sortie attendue du type de composant avec la synchronisation.

2. Procédé selon la revendication 1, comprenant en outre :
lorsqu'un premier composant matériel du ou des composants matériels existants ne correspond pas au type de composant :
le fait de déterminer (316) qu'un second composant matériel du ou des composants matériels existants est capable de mettre en oeuvre la tâche en tant qu'alternative au premier composant matériel,
la fourniture de la tâche au second composant matériel,
la réception d'une sortie en provenance du second composant matériel en conséquence de la fourniture de la tâche ; et
la fourniture de la sortie à la couche d'application.

3. Procédé selon la revendication 1 ou la revendication 2, dans lequel le fait de déterminer si le ou les composants matériels existants du dispositif informatique correspondent au type de composant pour mettre en oeuvre la tâche comprend :
la transmission d'une demande d'informations de pilote à une couche de pilote de dispositif matériel, la demande d'informations de pilote correspondant au ou aux composants matériels existants ;
la réception des informations de pilote en provenance de la couche de pilote de dispositif matériel, les informations de pilote correspondant à un ensemble de fonctions du ou des composants matériels existants ; et
la détermination d'une ou plusieurs fonctions de l'ensemble de fonctions qui correspond au type de composant.

4. Procédé selon la revendication 1 ou la revendication 2, dans lequel le fait de déterminer si le ou les composants matériels existants du dispositif informatique correspondent au type de composant pour mettre en oeuvre la tâche comprend le fait de déterminer si un ou plusieurs composants d'un système de commande en temps réel correspondent au type de composant pour mettre en oeuvre la tâche.

5. Procédé selon la revendication 1 ou la revendication 2, dans lequel le fait de déterminer si le ou les composants matériels existants du dispositif informatique correspondent au type de composant pour mettre en oeuvre la tâche comprend l'un parmi :
le fait de déterminer si un ou plusieurs composants d'un système de commande de dispositif médical correspondent au type de composant pour mettre en oeuvre la tâche ;
le fait de déterminer si un ou plusieurs composants d'un système de commande de turbine de puissance correspondent au type de composant pour mettre en oeuvre la tâche ; et
le fait de déterminer si un ou plusieurs composants d'un système de commande d'usine correspondent au type de composant pour mettre en oeuvre la tâche.

6. Procédé selon l'une quelconque revendication précédente, dans lequel la planification de synchronisation mappe la synchronisation sur une ressource E/S de système disponible et/ou sur des exigences de synchronisation de système externe et interne.

7. Procédé selon l'une quelconque revendication précédente, dans lequel la fourniture de l'entrée ou de la sortie à la couche d'application en tant qu'entrée émulée ou sortie émulée comprend le retard de la transmission d'une ou plusieurs parties de l'entrée ou de la sortie conformément à la synchronisation.

8. Procédé selon l'une quelconque revendication précédente, comprenant en outre :
lorsqu'un premier composant matériel du ou des composants matériels existants n'a pas de synchronisation matérielle qui correspond à la planification de synchronisation ;
le fait de déterminer qu'un second composant matériel du ou des composants matériels existants a une synchronisation matérielle qui correspond à la planification de synchronisation,
la fourniture de la tâche au second composant matériel,
la réception d'une entrée ou une sortie en provenance du second composant matériel en conséquence de la fourniture de la tâche, et
la fourniture de l'entrée ou la sortie à la couche d'application.

9. Procédé selon l'une quelconque revendication précédente, comprenant en outre :
le fait de déterminer si le ou les composants matériels existants du dispositif informatique ont une synchronisation matérielle qui ne correspond pas à la planification de synchronisation.

10. Procédé selon la revendication 9, dans lequel le fait de déterminer si le ou les composants matériels existants du dispositif informatique ont une synchronisation matérielle qui ne correspond pas à la planification de synchronisation comprend :
la transmission d'une demande d'informations de pilote à une couche de pilote de dispositif matériel, la demande d'informations de pilote correspondant au ou aux composants matériels existants ; et
la réception d'informations de pilote en provenance de la couche de pilote de dispositif matériel, les informations de pilote correspondant à une synchronisation matérielle du ou des composants matériels existants.

11. Procédé selon l'une quelconque revendication précédente, dans lequel la fourniture de la tâche et de la planification de synchronisation au planificateur E/S comprend la fourniture de la tâche et de la planification de synchronisation à un planificateur E/S ayant une horloge indépendante ayant une fréquence d'horloge qui est indépendante d'une fréquence d'horloge du ou des composants matériels existants.

12. Procédé selon l'une quelconque revendication précédente, dans lequel la fourniture de la tâche et de la planification de synchronisation au planificateur E/S comprend la fourniture de la tâche et de la planification de synchronisation à un planificateur E/S basé sur un matériel.

13. Procédé selon l'une quelconque revendication précédente, dans lequel la fourniture de la tâche et de la planification de synchronisation au planificateur E/S comprend la fourniture de la tâche et de la planification de synchronisation à un planificateur E/S basé sur un logiciel.

14. Procédé selon l'une quelconque des revendications 1 à 13, dans lequel la détermination du type de composant pour mettre en oeuvre la tâche comprend la détermination d'un contexte de la demande.
